# EUROPEAN PATENT APPLICATION

(11) **EP 4 489 466 A1**
(43) Date of publication of application: **08.01.2025**
(21) Application number: 23778025.9
(22) Date of filing: 23.03.2023
(51) Int. Cl.: H04W 24/02

(54) **INFORMATION TRANSMISSION METHOD AND APPARATUS**

(30) Priority: 02.04.2022 CN 202210351937
(71) Applicant: Huawei Technologies Co., Ltd., Shenzhen, Guangdong 518129 (CN)
(72) Inventor: DU, Rui, Shenzhen, Guangdong 518129 (CN); RUAN, Wei, Shenzhen, Guangdong 518129 (CN); HU, Mengshi, Shenzhen, Guangdong 518129 (CN); NAREN, Gerile, Shenzhen, Guangdong 518129 (CN); HAN, Xiao, Shenzhen, Guangdong 518129 (CN); SUN, Li, Shenzhen, Guangdong 518129 (CN)
(74) Representative: MERH-IP Matias Erny Reichl Hoffmann Patentanwälte PartG mbB
(86) International application number: PCT/CN2023/083513
(87) International publication number: WO 2023/185656

(57) **Abstract**

This application relates to the field of communication technologies, and provides an information transmission method and an apparatus, to improve sensing performance. This application is used in a wireless local area network system supporting IEEE 802.11ax next-generation Wi-Fi protocols, for example, 802.11be, Wi-Fi 7, EHT, 802.11ad, 802.11ay, and 802.11bf, a next-generation 802.11be protocol, for example, Wi-Fi 8, or a next-generation 802.11 series protocol. In the method, a first device receives, from a second device, a PPDU for sensing measurement. The first device sends, to the second device, information indicating AGC. According to the foregoing solutions, the second device may determine, during sensing, whether a channel change is caused by adjustment of a gain of a sensing measurement link or by a channel environment, to improve accuracy of a sensing result.

## Description

### CROSS-REFERENCE TO RELATED APPLICATIONS

This application claims priority to Chinese Patent Application No. 202210351937.8, filed with the China National Intellectual Property Administration on April 2, 2022 and entitled "INFORMATION TRANSMISSION METHOD AND APPARATUS", which is incorporated herein by reference in its entirety.

### TECHNICAL FIELD

This application relates to the field of communication technologies, and in particular, to an information transmission method and an apparatus.

### BACKGROUND

In daily life, a signal sent by a wireless fidelity (wireless fidelity, Wi-Fi) device is usually received after being reflected, diffracted, and scattered by various obstacles, and an actually received signal is usually obtained by superimposing a plurality of signals due to this phenomenon, in other words, a channel environment may become complex. However, from another perspective, this also helps sense, by using a radio signal, a physical environment that the radio signal passes through. A radio signal, for example, channel state information (channel state information, CSI), affected by various obstacles is analyzed to infer and sense an ambient environment. Therefore, a wireless local area network (wireless local area network, WLAN) sensing technology is derived. Due to broadcast deployment of Wi-Fi devices and an increase in sensing requirements, it is a hot topic of current research to perform sensing by using a commonly available Wi-Fi device.

Currently, in the WLAN sensing technology, a receiver and a transmitter may implement a sensing function by observing a plurality of physical layer protocol data units (physical protocol data unit, PPDU). For example, the receiver may receive a plurality of PPDUs from the transmitter in a period of time, and perform channel estimation on the plurality of PPDUs, to separately obtain CSI. The receiver may send the obtained CSI to the transmitter. The transmitter may process the CSI obtained in the period of time, to obtain a channel change in the period of time. Alternatively, the receiver may process the CSI obtained in the period of time, to obtain a channel change in the period of time. The transmitter or the receiver can determine, based on the channel change, an environment in which a channel is located, to obtain a sensing result.

However, adjustment of a gain or power of a sensing measurement link may have additional impact on the sensing result, and consequently the sensing result is inaccurate.

### SUMMARY

This application provides an information transmission method and an apparatus, to improve sensing performance.

According to a first aspect, an information transmission method is provided. The method may be performed by a first device or a chip with similar functions of a first device. In the method, the first device receives a physical layer protocol data unit (physical layer protocol data unit, PPDU) from a second device. The PPDU is used for sensing measurement. The first device sends first information to the second device, where the first information indicates information about automatic gain control (automatic gain control, AGC). The AGC indicates a gain index of the AGC obtained when the PPDU is received.

According to the foregoing solutions, the first device may feed back, to the second device, the gain index of the AGC obtained when the PPDU is received, that is, the first device may feed back adjustment of a gain of a sensing measurement link to the second device. Therefore, the second device may determine, during sensing, whether a channel change is caused by adjustment of the gain of the sensing measurement link or by a channel environment, to improve accuracy of a sensing result.

In a possible implementation, the first information includes one or more of the following: gain index information of a low noise amplifier (low noise amplifier, LNA), gain index information of a variable gain amplifier (variable gain amplifier, VGA), AGC saturation information, or AGC jump information.

In an example, the AGC saturation information may include either AGC saturation or AGC non-saturation. Optionally, when the AGC is not saturated, the first information may not carry the AGC saturation information. For example, the AGC saturation may be understood as excessively large adjustment of the AGC.

In another example, the AGC jump information may include either an AGC jump or an AGC non-jump. Optionally, when the AGC jump does not occur, the first information may not carry the AGC jump information. For example, the AGC jump may be understood as that the gain index of the AGC changes.

According to the foregoing solutions, the first device may feed back the AGC to the second device, for example, the gain index information of the LNA, the gain index information of the VGA, the AGC saturation information, or the AGC jump information, so that the second device can determine whether a gain on a first device side is adjusted.

In a possible implementation, the first information is carried in a sensing measurement report frame or a channel state information (channel state information, CSI) frame. For example, the first information may be carried in a sensing measurement report field of the sensing measurement report frame. For another example, the first information may be carried in a CSI report field or a CSI report control field of the CSI frame.

According to the foregoing solutions, the first device may send the CSI frame carrying the AGC to the second device, so that the second device may determine a processing manner for the CSI frame based on the AGC in the CSI frame. For example, if the second device determines that the first information includes the AGC saturation, that is, AGC saturation occurs when the first device receives the PPDU, the second device may choose not to use CSI included in the CSI frame for sensing.

In a possible implementation, the first information is carried in one of the following: a directional multi-gigabit (directional multi-gigabit, DMG) sensing report element, a DMG channel measurement feedback element, or an enhanced directional multi-gigabit (enhanced directional multi-gigabit, EDMG) channel measurement feedback element.

According to the foregoing solutions, in a high-frequency scenario, the first device may also send the AGC to the second device, to enhance sensing performance.

In a possible implementation, the first information further includes one or more of an identifier of a DMG sensing instance, an identifier of a DMG sensing burst, and an identifier of a DMG measurement program. One DMG sensing burst includes one or more DMG sensing instances, one DMG measurement program includes one or more DMG sensing bursts, and one DMG sensing instance indicates one time of sensing.

In a possible case, if the AGC is adjusted in each DMG sensing instance, the AGC corresponds to each DMG sensing instance. In another possible case, if the AGC is stable in a same sensing burst, and is adjusted in different DMG bursts, the AGC needs to correspond to each DMG burst. In still another possible case, if the AGC is stable in a same DMG measurement program, and is adjusted in different DMG measurement programs, the AGC needs to correspond to the DMG measurement program.

According to the foregoing solutions, when the first device sends the AGC, the AGC may correspond to one DMG sensing instance, one DMG sensing burst, or one DMG measurement program.

In a possible implementation, the first device may perform self-alignment on the gain index of the AGC, to obtain error information of the AGC. The first device sends the error information of the AGC to the second device.

According to the foregoing solutions, the first device may send the error information of the AGC to the second device. Therefore, when obtaining the AGC obtained when the first device receives the PPDU, the second device compensates for the AGC based on the error information of the AGC, to improve sensing performance.

According to a second aspect, an information transmission method is provided. The method may be performed by a second device or a chip with similar functions of a second device. In the method, the second device sends a PPDU to a first device. The PPDU is used for sensing measurement. The second device receives first information from the first device, where the first information indicates AGC. The AGC indicates a gain index of the AGC obtained when the PPDU is received.

According to the foregoing solutions, the second device may obtain the gain index of the AGC obtained when the first device receives the PPDU, that is, the second device may obtain adjustment of a gain of a sensing measurement link. Therefore, the second device may determine, during sensing, whether a channel change is caused by adjustment of the gain of the sensing measurement link or by a channel environment, to improve accuracy of a sensing result.

In a possible implementation, the first information includes one or more of the following: gain index information of an LNA, gain index information of a VGA, AGC saturation information, or AGC jump information.

In an example, the AGC saturation information may include either AGC saturation or AGC non-saturation. Optionally, when the AGC is not saturated, the first information may not carry the AGC saturation information. It should be noted that the AGC saturation may be understood as excessively large adjustment of the AGC.

In another example, the AGC jump information may include either an AGC jump or an AGC non-jump. Optionally, when the AGC jump does not occur, the first information may not carry the AGC jump information. It should be noted that the AGC jump may be understood as that the gain index of the AGC changes.

According to the foregoing solutions, the second device may obtain the AGC of the first device, for example, the gain index information of the LNA, the gain index information of the VGA, the AGC saturation information, or the AGC jump information, to determine whether a gain on a first device side is adjusted.

In a possible implementation, the first information is carried in a sensing measurement report frame or a CSI frame. For example, the first information may be carried in a sensing measurement report field of the sensing measurement report frame. For another example, the first information may be carried in a CSI report field or a CSI report control field of the CSI frame.

According to the foregoing solutions, the first device may send the CSI frame carrying the AGC to the second device, so that the second device may determine a processing manner for the CSI frame based on the AGC in the CSI frame. For example, if the second device determines that the first information includes the AGC saturation, that is, AGC saturation occurs when the first device receives the PPDU, the second device may choose not to use CSI included in the CSI frame for sensing.

In a possible implementation, the first information is carried in one of the following: a DMG sensing report element, a DMG channel measurement feedback element, or an EDMG channel measurement feedback element.

According to the foregoing solutions, in a high-frequency scenario, the second device may also obtain the AGC, to enhance sensing performance.

In a possible implementation, the first information further includes one or more of an identifier of a DMG sensing instance, an identifier of a DMG sensing burst, and an identifier of a DMG measurement program. One DMG sensing burst includes one or more DMG sensing instances, one DMG measurement program includes one or more DMG sensing bursts, and one DMG sensing instance indicates one time of sensing.

In a possible case, if the AGC is adjusted in each DMG sensing instance, the AGC corresponds to each DMG sensing instance. In another possible case, if the AGC is stable in a same sensing burst, and is adjusted in different DMG bursts, the AGC needs to correspond to each DMG burst. In still another possible case, if the AGC is stable in a same DMG measurement program, and is adjusted in different DMG measurement programs, the AGC needs to correspond to the DMG measurement program.

According to the foregoing solutions, the AGC of the first device may correspond to one DMG sensing instance, one DMG sensing burst, or one DMG measurement program.

In a possible implementation, the second device may obtain error information of the AGC from the first device.

According to the foregoing solutions, the second device may obtain the error information of the AGC of the first device. Therefore, when obtaining the AGC obtained when the first device receives the PPDU, the second device compensates for the AGC based on the error information of the AGC, to improve sensing performance.

According to a third aspect, an information transmission method is provided. The method may be performed by a first device or a chip with similar functions of a first device. In the method, the first device sends first power indication information and second power indication information to a second device, where the first power indication information and the second power indication information indicate power of a same PPDU, and the PPDU is used for sensing measurement. First power indicated by the first power indication information is different from second power indicated by the second power indication information.

According to the foregoing solutions, the first device may indicate, to the second device, the power, namely, the first power and the second power, of the same PPDU, so that the second device may send the PPDU or generate CSI based on the first power and the second power. This can reduce impact caused by a jump of actual transmit power of the PPDU on a sensing result, and improve sensing performance.

In a possible implementation, the first power is power, of the PPDU, to be processed by a digital-to-analog converter, and the second power is the actual transmit power of the PPDU.

According to the foregoing solutions, the first device may send, to the second device, the power, of the PPDU, to be processed by the digital-to-analog converter, that is, power of the PPDU in digital domain, and the actual transmit power of the PPDU, so that the second device can determine a power adjustment status of the PPDU. In this way, the second device can compensate for the CSI based on the power adjustment status of the PPDU during sensing, to improve sensing performance.

In a possible implementation, the first power indication information is carried in a null data packet announcement (null data packet announcement, NDPA) frame or an EDMG transmit power element.

According to the foregoing solutions, the first device may send the first power indication information carried in the NDPA frame or the EDMG transmit power element to the second device, so that the second device can obtain the power, of the PPDU, to be processed by the digital-to-analog converter.

In a possible implementation, the first power is power of second information, and the second power is power of third information. The second information includes a field, of the PPDU, used for sensing measurement, and the third information includes another field, of the PPDU, other than the field used for sensing measurement.

According to the foregoing solutions, the first device separately sends the first power of the second information, and the second power of the third information to the second device. In this way, when sending the PPDU, the second device sends the second information and the third information by using different power, to reduce impact caused by a jump of actual transmit power of the PPDU on a sensing result, and improve sensing performance.

Optionally, the second power indication information is a target (target) received signal strength indicator (received signal strength indicator, RSSI). The first power indicated by the first power indication information is a fixed value.

According to the foregoing solutions, the first device may indicate, to the second device, that the power of the second information is a fixed value, and indicate, to the second device, desired received power of the third information. Therefore, when sending the PPDU, the second device separately sends the second information and the third information by using different power. Because actual transmit power of the field used for sensing measurement is a fixed value, that is, the actual transmit power of the field used for sensing measurement does not jump, sensing performance can be improved. In addition, because power of a field that is not used for sensing measurement is determined based on the RSSI, a decoding rate of the first device on the field that is not used for sensing measurement is improved.

In a possible implementation, the second information includes an HE-STF.

According to the foregoing solutions, when receiving the PPDU, the first device may adjust the AGC based on the HE-STF. Therefore, when the field used for sensing measurement includes the HE-STF, AGC adjustment may comply with the field used for sensing measurement, to improve a receiving success rate of the field used for sensing measurement.

In a possible implementation, the first power indication information is carried in station (station, STA) information, a trigger frame, or a beam refinement protocol (beam refinement protocol, BRP) frame.

According to a fourth aspect, an information transmission method is provided. The method may be performed by a second device or a chip with similar functions of a second device. In the method, the second device receives first power indication information and second power indication information from a first device, where the first power indication information and the second power indication information indicate power of a same PPDU, and the PPDU is used for sensing measurement. First power indicated by the first power indication information is different from second power indicated by the second power indication information.

According to the foregoing solutions, the second device may obtain the power, namely, the first power and the second power, of the same PPDU, so that the second device may send the PPDU or generate CSI based on the first power and the second power. This can reduce impact caused by a jump of actual transmit power of the PPDU on a sensing result, and improve sensing performance.

In a possible implementation, the first power is power, of the PPDU, to be processed by a digital-to-analog converter, and the second power is the actual transmit power of the PPDU.

According to the foregoing solutions, the second device may obtain the power, of the PPDU, to be processed by the digital-to-analog converter, that is, power of the PPDU in digital domain, and the actual transmit power of the PPDU, to determine a power adjustment status of the PPDU. In this way, the second device can compensate for the CSI based on the power adjustment status of the PPDU during sensing, to improve sensing performance.

In a possible implementation, the first power indication information is carried in an NDPA frame or an EDMG transmit power element.

In a possible implementation, the second device sends second information based on the first power. The second information includes a field, of the PPDU, used for sensing measurement. The second device sends third information based on the second power. The third information includes another field, of the PPDU, other than the field used for sensing measurement.

According to the foregoing solutions, the second device may obtain the first power of the second information and the second power of the third information. In this way, when sending the PPDU, the second device sends the second information and the third information by using different power, to reduce impact caused by a jump of actual transmit power of the PPDU on a sensing result, and improve sensing performance.

Optionally, the second power indication information is a target (target) RSSI. The first power indicated by the first power indication information is a fixed value.

According to the foregoing solutions, the first device may indicate, to the second device, that the power of the second information is a fixed value, and indicate, to the second device, desired received power of the third information. Therefore, when sending the PPDU, the second device separately sends the second information and the third information by using different power. Because actual transmit power of the field used for sensing measurement is a fixed value, that is, the actual transmit power of the field used for sensing measurement does not jump, sensing performance can be improved. In addition, because power of a field that is not used for sensing measurement is determined based on the RSSI, a decoding rate of the first device on the field that is not used for sensing measurement is improved.

In a possible implementation, the second information includes an HE-STF.

According to the foregoing solutions, when receiving the PPDU, the first device may adjust the AGC based on the HE-STF. Therefore, when the field used for sensing measurement includes the HE-STF, AGC adjustment may comply with the field used for sensing measurement, to improve a receiving success rate of the field used for sensing measurement.

In a possible implementation, the first power indication information is carried in STA information, a trigger frame, or a beam refinement protocol BRP frame.

According to a fifth aspect, a communication apparatus is provided, and includes a transceiver unit and a processing unit.

The transceiver unit is configured to receive a PPDU from a second device. The PPDU is used for sensing measurement. The processing unit is configured to generate first information, where the first information indicates AGC. The AGC indicates a gain index of the AGC obtained when the PPDU is received. The transceiver unit is further configured to send the first information to the second device.

In a possible implementation, the first information includes one or more of the following: gain index information of an LNA, gain index information of a VGA, AGC saturation information, or AGC jump information.

In an example, the AGC saturation information may include either AGC saturation or AGC non-saturation. Optionally, when the AGC is not saturated, the first information may not carry the AGC saturation information. It should be noted that the AGC saturation may be understood as excessively large adjustment of the AGC. In another example, the AGC jump information may include either an AGC jump or an AGC non-jump. Optionally, when the AGC jump does not occur, the first information may not carry the AGC jump information. It should be noted that the AGC jump may be understood as that the gain index of the AGC changes.

In a possible implementation, the first information is carried in a sensing measurement report field or a CSI frame. For example, the first information may be carried in the sensing measurement report field of a sensing measurement report frame. For another example, the first information may be carried in a CSI report field or a CSI report control field of the CSI frame.

In a possible implementation, the first information is carried in one of the following: a DMG sensing report element, a DMG channel measurement feedback element, or an EDMG channel measurement feedback element.

In a possible implementation, the first information further includes one or more of an identifier of a DMG sensing instance, an identifier of a DMG sensing burst, and an identifier of a DMG measurement program. One DMG sensing burst includes one or more DMG sensing instances, one DMG measurement program includes one or more DMG sensing bursts, and one DMG sensing instance indicates one time of sensing.

In a possible case, if the AGC is adjusted in each DMG sensing instance, the AGC corresponds to each DMG sensing instance. In another possible case, if the AGC is stable in a same sensing burst, and is adjusted in different DMG bursts, the AGC needs to correspond to each DMG burst. In still another possible case, if the AGC is stable in a same DMG measurement program, and is adjusted in different DMG measurement programs, the AGC needs to correspond to the DMG measurement program.

In a possible implementation, the processing unit is further configured to perform self-alignment on the gain index of the AGC, to obtain error information of the AGC. The transceiver unit is further configured to send the error information of the AGC to the second device.

According to a sixth aspect, a communication apparatus is provided, and includes a processing unit and a transceiver unit.

The processing unit is configured to generate a PPDU. The PPDU is used for sensing measurement. The transceiver unit is configured to send the PPDU to a first device. The transceiver unit is further configured to receive first information from the first device, where the first information indicates AGC. The AGC indicates a gain index of the AGC obtained when the PPDU is received.

In a possible implementation, the first information includes one or more of the following: gain index information of an LNA, gain index information of a VGA, AGC saturation information, or AGC jump information.

In an example, the AGC saturation information may include either AGC saturation or AGC non-saturation. Optionally, when the AGC is not saturated, the first information may not carry the AGC saturation information. It should be noted that the AGC saturation may be understood as excessively large adjustment of the AGC.

In another example, the AGC jump information may include either an AGC jump or an AGC non-jump. Optionally, when the AGC jump does not occur, the first information may not carry the AGC jump information. It should be noted that the AGC jump may be understood as that the gain index of the AGC changes.

In a possible implementation, the first information is carried in a sensing measurement report field or a CSI frame. For example, the first information may be carried in the sensing measurement report field of a sensing measurement report frame. For another example, the first information may be carried in a CSI report field or a CSI report control field of the CSI frame.

In a possible implementation, the first information is carried in one of the following: a DMG sensing report element, a DMG channel measurement feedback element, or an EDMG channel measurement feedback element.

In a possible implementation, the first information further includes one or more of an identifier of a DMG sensing instance, an identifier of a DMG sensing burst, and an identifier of a DMG measurement program. One DMG sensing burst includes one or more DMG sensing instances, one DMG measurement program includes one or more DMG sensing bursts, and one DMG sensing instance indicates one time of sensing.

In a possible case, if the AGC is adjusted in each DMG sensing instance, the AGC corresponds to each DMG sensing instance. In another possible case, if the AGC is stable in a same sensing burst, and is adjusted in different DMG bursts, the AGC needs to correspond to each DMG burst. In still another possible case, if the AGC is stable in a same DMG measurement program, and is adjusted in different DMG measurement programs, the AGC needs to correspond to the DMG measurement program.

In a possible implementation, the transceiver unit is further configured to obtain error information of the AGC from the first device.

According to a seventh aspect, a communication apparatus is provided, and includes a processing unit and a transceiver unit.

The processing unit is configured to generate first power indication information and second power indication information. The transceiver unit is configured to send the first power indication information and the second power indication information to a second device, where the first power indication information and the second power indication information indicate power of a same PPDU, and the PPDU is used for sensing measurement. First power indicated by the first power indication information is different from second power indicated by the second power indication information.

In a possible implementation, the first power is power, of the PPDU, to be processed by a digital-to-analog converter, and the second power is the actual transmit power of the PPDU.

In a possible implementation, the first power indication information is carried in an NDPA frame or an EDMG transmit power element.

In a possible implementation, the first power is power of second information, and the second power is power of third information. The second information includes a field, of the PPDU, used for sensing measurement, and the third information includes another field, of the PPDU, other than the field used for sensing measurement.

Optionally, the second power indication information is a target (target) RSSI. The first power indicated by the first power indication information is a fixed value.

In a possible implementation, the second information includes an HE-STF.

In a possible implementation, the first power indication information is carried in STA information, a trigger frame, or a BRP frame.

According to an eighth aspect, a communication apparatus is provided, and includes a processing unit and a transceiver unit.

The transceiver unit is configured to receive first power indication information and second power indication information from a first device, where the first power indication information and the second power indication information indicate power of a same PPDU, and the PPDU is used for sensing measurement. First power indicated by the first power indication information is different from second power indicated by the second power indication information. The processing unit is configured to generate CSI or the PPDU based on the first power and the second power.

In a possible implementation, the first power is power, of the PPDU, to be processed by a digital-to-analog converter, and the second power is the actual transmit power of the PPDU.

In a possible implementation, the first power indication information is carried in an NDPA frame or an EDMG transmit power element.

In a possible implementation, the transceiver unit is further configured to send second information based on the first power. The second information includes a field, of the PPDU, used for sensing measurement. The transceiver unit is further configured to send third information based on the second power. The third information includes another field, of the PPDU, other than the field used for sensing measurement.

Optionally, the second power indication information is a target (target) RSSI. The first power indicated by the first power indication information is a fixed value.

In a possible implementation, the second information includes an HE-STF.

In a possible implementation, the first power indication information is carried in STA information, a trigger frame, or a beam refinement protocol BRP frame.

According to a ninth aspect, this application provides a communication apparatus, including a processor. The processor is coupled to a memory, the memory is configured to store a computer program or instructions, and the processor is configured to execute the computer program or the instructions, to perform the implementation methods in the first aspect to the fourth aspect. The memory may be located inside or outside the apparatus. There are one or more processors.

According to a tenth aspect, this application provides a communication apparatus, including: a processor and an interface circuit. The interface circuit is configured to communicate with another apparatus, and the processor is configured to perform the implementation methods in the first aspect to the fourth aspect.

According to an eleventh aspect, a communication apparatus is provided. The apparatus includes a logic circuit and an input/output interface.

In a design, the input/output interface is configured to input a PPDU from a second device. The PPDU is used for sensing measurement. The logic circuit is configured to generate first information, where the first information indicates AGC. The AGC indicates a gain index of the AGC obtained when the PPDU is received. The input/output interface is further configured to output the first information to the second device.

In a design, the logic circuit is configured to generate a PPDU. The PPDU is used for sensing measurement. The input/output interface is configured to output the PPDU to a first device. The input/output interface is further configured to input first information from the first device, where the first information indicates AGC. The AGC indicates a gain index of the AGC obtained when the PPDU is received.

In a design, the logic circuit is configured to generate first power indication information and second power indication information. The input/output interface is configured to output the first power indication information and the second power indication information to a second device, where the first power indication information and the second power indication information indicate power of a same PPDU, and the PPDU is used for sensing measurement. First power indicated by the first power indication information is different from second power indicated by the second power indication information.

In a design, the input/output interface is configured to input first power indication information and second power indication information from a first device, where the first power indication information and the second power indication information indicate power of a same PPDU, and the PPDU is used for sensing measurement. First power indicated by the first power indication information is different from second power indicated by the second power indication information. The logic circuit is configured to generate CSI or the PPDU based on the first power and the second power.

According to a twelfth aspect, this application provides a communication system, including: a communication apparatus configured to perform the implementation methods in the first aspect, and a communication apparatus configured to perform the implementation methods in the second aspect.

According to a thirteenth aspect, this application provides a communication system, including a communication apparatus configured to perform the implementation methods in the third aspect, and a communication apparatus configured to perform the implementation methods in the fourth aspect.

According to a fourteenth aspect, this application further provides a chip system, including: a processor, configured to perform the implementation methods in the first aspect to the fourth aspect.

According to a fifteenth aspect, this application further provides a computing program product, including computer-executable instructions. When the computer-executable instructions are run on a computer, the implementation methods in the first aspect to the fourth aspect are performed.

According to a sixteenth aspect, this application further provides a computer-readable storage medium. The computer-readable storage medium includes a computer program or instructions. When the instructions are run on a computer, the implementation methods in the first aspect to the fourth aspect are implemented.

For technical effect achieved by the fifth aspect to the sixteenth aspect, refer to technical effect in the first aspect to the fourth aspect. Details are not described herein again.

### BRIEF DESCRIPTION OF DRAWINGS

FIG. 1 is a schematic diagram of a communication system according to an embodiment of this application;
FIG. 2 is an example flowchart of a signal transmission method according to an embodiment of this application;
FIG. 3A is an example flowchart of a sensing procedure according to an embodiment of this application;
FIG. 3B is an example flowchart of a sensing procedure according to an embodiment of this application;
FIG. 3C is an example flowchart of a sensing procedure according to an embodiment of this application;
FIG. 3D is an example flowchart of a sensing procedure according to an embodiment of this application;
FIG. 3E is an example flowchart of a sensing procedure according to an embodiment of this application;
FIG. 4 is a schematic diagram of a structure of a DMG sensing report element according to an embodiment of this application;
FIG. 5 is a schematic diagram of a structure of STA information of an NDPA frame according to an embodiment of this application;
FIG. 6 is an example flowchart of a signal transmission method according to an embodiment of this application;
FIG. 7 is an example flowchart of a signal transmission method according to an embodiment of this application;
FIG. 8 is a schematic diagram of a structure of an LMR according to an embodiment of this application;
FIG. 9 is an example flowchart of a signal transmission method according to an embodiment of this application;
FIG. 10A is a schematic diagram of a structure of a PPDU according to an embodiment of this application;
FIG. 10B is a schematic diagram of a structure of a PPDU according to an embodiment of this application;
FIG. 11 is a schematic diagram of a structure of an NDPA frame according to an embodiment of this application;
FIG. 12 is a schematic diagram of a structure of a communication apparatus according to an embodiment of this application;
FIG. 13 is a schematic diagram of a structure of a communication apparatus according to an embodiment of this application;
FIG. 14 is a schematic diagram of a structure of a communication apparatus according to an embodiment of this application; and
FIG. 15 is a schematic diagram of a structure of a communication apparatus according to an embodiment of this application.

### DESCRIPTION OF EMBODIMENTS

The following explains and describes technical terms in embodiments of this application.
(1) Sensing measurement may also be referred to as radio sensing, means that a transmitter and a receiver transmit a signal to implement an objective of discovering a target or determining a target status. Wireless local area network (wireless local area network, WLAN) sensing means that a station (station, STA) with a WLAN sensing capability uses a received WLAN signal to detect a feature of an expected target in a given environment. For example, the feature includes one or more of a range, a speed, an angle, motion, existence or proximity, a gesture, and the like. The target includes one or more of an object, a person, an animal, and the like. The environment includes one or more of a room, a house, a vehicle, an enterprise, and the like.

For example, the transmitter may send a signal used for sensing measurement to the receiver, and the receiver may measure the signal, to obtain a channel estimation result, for example, CSI. The receiver may perform sensing based on the CSI. Alternatively, the receiver may send the channel estimation result to the transmitter, and the transmitter performs target sensing or target status sensing based on the channel estimation result. For example, the receiver or the transmitter may process the CSI, to determine whether a moving target exists in the environment. For example, it is assumed that a moving target exists in the environment. Motion of the target affects amplitude, a frequency, and the like of a PPDU that is in a period of time, and the impact is reflected in CSI that is in the period of time. Therefore, the receiver or the transmitter may determine, based on the CSI, whether the moving target exists in the environment. During sensing, devices that participate in sensing are as follows:
a sensing initiator (sensing initiator): a device that initiates a sensing procedure;
a sensing responder (sensing responder): a device that responds to sensing initiated by the sensing initiator and participates in sensing;
a sensing transmitter (sensing transmitter): a device that sends a sensing signal, where the sensing signal may be a signal, for example, a PPDU, used for sensing measurement, and a sensing receiver may measure the sensing signal; and
a sensing receiver (sensing receiver): a device that receives the sensing signal.

(2) Actual transmit power may also be referred to as transmit power, and is power, of an antenna port, obtained when a signal is sent. Alternatively, the actual transmit power may be understood as power used when a signal is actually sent.

(3) Digital domain power is power of a signal to be processed by a digital-to-analog converter (digital-to-analog converter, DAC). The digital domain power may be understood as power of a signal before the signal enters the DAC.

(4) Radio frequency (radio frequency, RF) power may also be referred to as analog domain power, and is power of a signal in an analog domain. The radio frequency power may be understood as power from the DAC to the antenna port.

With reference to accompanying drawings, the following explains and describes an information transmission method provided in embodiments of this application.

Embodiments of this application are applicable to a WLAN scenario, for example, applicable to the Institute of Electrical and Electronics Engineers (Institute of Electrical and Electronics Engineers, IEEE) 802.11 system standard, for example, 802.11a/b/g, 802.11n, 802.11ac, 802.1 1ax, or a next generation of 802.11ax, for example, the 802.11be standard, Wi-Fi 7, or extremely high throughput (extremely high throughput, EHT), 802.11ad, 802.11ay, 802.11bf, or a next generation of 802.11be, for example, Wi-Fi 8 or a next-generation standard. Alternatively, embodiments of this application are applicable to a wireless local area network system, for example, an internet of things (internet of things, IoT) network or a vehicle-to-everything (Vehicle to X, V2X) network. It is clear that embodiments of this application are further applicable to another possible communication system, for example, an LTE system, an LTE frequency division duplex (frequency division duplex, FDD) system, LTE time division duplex (time division duplex, TDD), a universal mobile telecommunication system (universal mobile telecommunication system, UMTS), a worldwide interoperability for microwave access (worldwide interoperability for microwave access, WiMAX) communication system, a 5G communication system, and a future 6G communication system.

The following uses an example in which embodiments of this application are applicable to a WLAN scenario. It should be understood that the WLAN develops from the 802.11a/g standard, and goes through 802.11n, 802.11ac, 802.11ax, and 802.11be that is currently being discussed. 802.11n may also be referred to as high throughput (high throughput, HT), 802.11ac may also be referred to as very high throughput (very high throughput, VHT), 802.11ax may also be referred to as high efficiency (high efficiency, HE) or Wi-Fi 6, 802.11be may also be referred to as EHT or Wi-Fi 7, and standards before HT, for example, 802.11a/b/g, may be collectively referred to as non-high throughput (Non-HT).

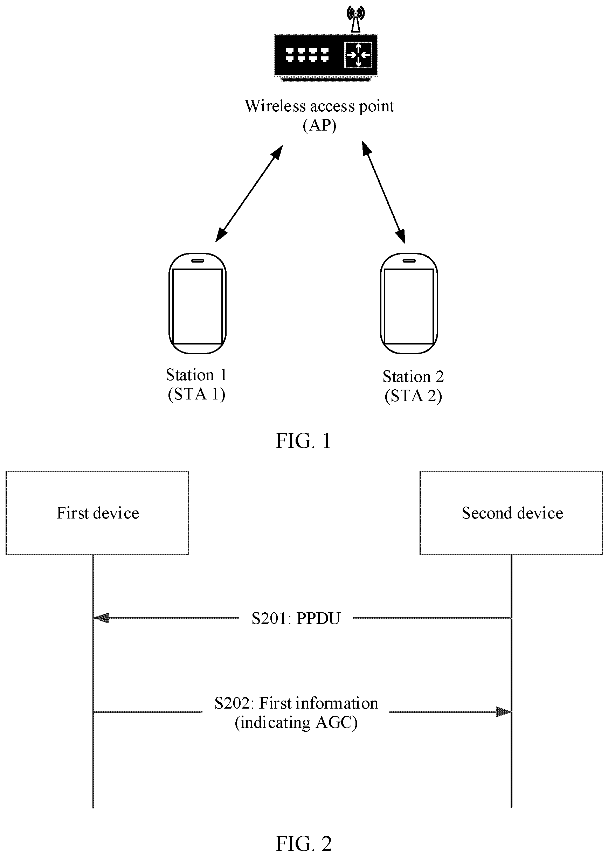

FIG. 1 is a diagram of a network architecture of a WLAN to which an embodiment of this application is applicable. In FIG. 1, that the WLAN includes one wireless access point (access point, AP) and two stations (station, STA) is used as an example. A STA associated with an AP can receive a radio frame sent by the AP, and can also send a radio frame to the AP. In addition, embodiments of this application are also applicable to communication between APs. For example, the APs may communicate with each other by using a distributed system (distributed system, DS). Embodiments of this application are also applicable to communication between STAs. It should be understood that quantities of APs and STAs in FIG. 1 are merely an example. There may be more or less APs and STAs.

The access point may be an access point through which a terminal device (for example, a mobile phone) accesses a wired (or wireless) network, and is mainly deployed in a home, a building, and a campus, with a typical coverage radius ranging from dozens of meters to hundreds of meters. It is clear that the access point may be alternatively deployed outdoors. The access point is equivalent to a bridge that connects the wired network and the wireless network. A main function of the access point is to connect various wireless network clients together and then connect the wireless network to the Ethernet. Specifically, the access point may be a terminal device (for example, a mobile phone) or a network device (for example, a router) with a Wi-Fi chip. The access point may be a device that supports the 802. 1The standard. Alternatively, the access point may be a device that supports a plurality of wireless local area network (wireless local area networks, WLAN) standards of the 802.11 family such as 802.11ax, 802.11ac, 802.11n, 802.11g, 802.11b, 802.11a, and 802.11be next-generation. The access point in this application may be an HE AP, an extremely high throughput (extremely high throughput, EHT) AP, or an access point applicable to a future generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television, a smart wearable device, a vehicle-mounted communication device, or a computer that supports a Wi-Fi communication function. Optionally, the station may support the 802.11be standard. Alternatively, the station may support a plurality of wireless local area network (wireless local area network, WLAN) standards of the 802.11 family such as 802.11ax, 802.11ac, 802.11n, 802.11g, 802.11b, 802.11a, and 802.11be next-generation.

The station in this application may be an HE STA or an extremely high throughput (extremely high throughput, EHT) STA, or may be a STA applicable to a future-generation Wi-Fi standard.

For example, the access point and the station may be devices used in the Internet of vehicles, Internet of things nodes or sensors in the Internet of things (Internet of things, IoT), smart cameras, smart remote controls, and smart water meters in a smart home, and sensors in a smart city.

The AP and the STA in embodiments of this application may be an AP and a STA that are applicable to an IEEE 802.11 system standard. The AP is an apparatus that is deployed in a wireless communication network and that provides a wireless communication function for a STA associated with the AP. The AP may be used as a center of the communication system, and is usually a network-side product that supports MAC and PHY in the 802.11 system standard, for example, may be a communication device like a base station, a router, a gateway, a repeater, a communication server, a switch, or a bridge. The base station may include a macro base station, a micro base station, a relay station, or the like in various forms. Herein, for ease of description, the devices mentioned above are collectively referred to as an AP. The STA is usually a terminal product, for example, a mobile phone or a notebook computer, that supports media access control (media access control, MAC) and a physical layer (physical, PHY) of the 802.11 system standard.

Currently, the receiver and the transmitter may implement a sensing function by observing a plurality of PPDUs. For example, the receiver may receive a plurality of PPDUs from the transmitter in a period of time, and perform channel estimation on the plurality of PPDUs, to separately obtain CSI. The receiver and the transmitter may process the CSI that is in the period of time, to obtain a channel change that is in the period of time. The receiver or the transmitter can determine, based on the channel change, an environment in which a channel is located, to obtain a sensing result.

To avoid additional impact caused by adjustment of a gain or power of a sensing measurement link, it is expected that the sensing measurement link maintains stable in the sensing period of time. For example, if the gain or the power of the sensing measurement link is adjusted, the transmitter cannot determine whether the channel change that is in the period of time is caused by the environment or the impact caused by adjustment of the gain or the power of the sensing measurement link. Consequently, the sensing result is inaccurate.

The sensing measurement link may be understood as a communication link used by the transmitter and the receiver to transmit sensing information. It should be noted that the sensing measurement link and the communication link between the transmitter and the receiver may be a same link, that is, the sensing measurement link and the communication link are not distinguished in form. In the sensing scenario, stability of the sensing measurement link is more important.

The gain or the power of the sensing measurement link may include gain or power control of the transmitter, and/or gain or power control of the receiver.

From the perspective of the transmitter, the gain or power control mainly relates to two parts: digital domain power and analog domain power. The digital domain power is signal power, in digital domain before the DAC, of a PPDU to be sent by the transmitter. When a power amplifier (power amplifier, PA) is located in a good linear region, power adjustment in the digital domain has a good linear feature. The analog domain power is power obtained when the PPDU reaches the antenna port through the PA, and an adjustment range is large. However, the analog domain power is easily affected by non-linearity of the PA due to impact of a PA working point.

From the perspective of the receiver, the gain or power control mainly relates to adjustment of automatic gain control (automatic gain control, AGC). The AGC may include a low noise amplifier (low noise amplifier, LNA) and/or a variable gain amplifier (variable gain amplifier, VGA). For example, an interval at which the LNA adjusts a gain index is large, and a potential difference between gain indexes is 6 dB. For example, an interval at which the VGA adjusts a gain index is small, and a potential difference between gain indexes is 0.25 dB to 0.5 dB. Therefore, the AGC may be adjusted by adjusting the LNA and/or the VGA.

Currently, the receiver performs AGC adjustment in a process of receiving a PPDU, that is, the gain or the power of the sensing measurement link is adjusted. Consequently, the sensing result obtained by the transmitter based on the CSI fed back by the receiver is inaccurate.

In view of this, an embodiment of this application provides an information transmission method. In the method, after receiving a PPDU from the transmitter, the receiver may send information, for example, information related to AGC, about adjustment of a gain or power of a link to the transmitter. Therefore, the transmitter may perform sensing based on the information related to the AGC and channel quality fed back by the receiver. FIG. 2 is an example flowchart of an information transmission method according to an embodiment of this application. The method may include the following operations. In an embodiment shown in FIG. 2, a first device may be the STA or the AP shown in FIG. 1, and a second device may be the STA or the AP shown in FIG. 1. In an example, when the first device is a STA, the second device may be a STA or an AP. In another example, when the first device is an AP, the second device may be a STA.

S201: The second device sends a PPDU to the first device.

Correspondingly, the first device receives the PPDU from the second device. The PPDU is used for sensing measurement.

In a possible case, in the embodiment shown in FIG. 2, a sensing initiator may be a sensing transmitter. For example, the second device determines to initiate a sensing procedure, and sends the PPDU to the first device. A manner in which the second device determines to initiate the sensing procedure is not specifically limited in this application. For example, when a specific condition is met, the second device may determine to initiate the sensing procedure, to send the PPDU to the first device. Alternatively, the second device may determine, through negotiation with the first device, to initiate the sensing procedure.

S202: The first device sends first information to the second device.

Correspondingly, the second device receives the first information from the first device.

The first information may indicate AGC. The AGC indicates a gain index of the AGC obtained when the PPDU in S201 is received. In other words, the AGC corresponds to the PPDU in S201. It may be understood that,, the first device (namely, a sensing receiver) performs AGC adjustment when receiving the PPDU in S201. The first information in S202 may be the gain index of the AGC obtained when the PPDU is received. The gain index of the AGC may be understood as a gain of the receiver.

The gain index of the AGC may include at least one of gain index information of an LNA in the AGC, gain index information of a VGA in the AGC, or AGC saturation information. For example, when the gain index of the AGC includes the gain index information of the LNA, a larger value of the gain index information of the LNA indicates a larger gain. It is assumed that the gain index information of the LNA includes 1 and 2, a gain obtained when a value of the gain index information of the LNA is 2 is greater than a gain obtained when a value of the gain index information of the LNA is 1. Alternatively, a smaller value of the gain index information of the LNA indicates a larger gain.

For another example, when the gain index of the AGC includes the gain index information of the VGA, a larger value of the gain index information of the VGA indicates a larger gain. It is assumed that the gain index information of the VGA includes 1 to 32, a gain obtained when a value of the gain index information of the VGA is 32 is greater than a gain obtained when a value of the gain index information of the VGA is 31. Alternatively, a smaller value of the gain index information of the VGA indicates a larger gain.

For another example, when the gain index of the AGC includes the AGC saturation information, if the AGC saturation information indicates that the AGC is saturated, it may be considered that the gain is excessively large. If the AGC saturation information indicates that the AGC is not saturated, it may be considered that the gain is within a proper range.

In a possible case, the first information may include one or more of the following information: gain index information of an LNA in the AGC, gain index information of a VGA in the AGC, AGC saturation information, AGC jump information, AGC change information, or first indication information.

In an example, the first information may include at least one of the gain index information of the LNA and the gain index information of the VGA. For example, the first device may indicate the gain index information of the LNA by using a first bit sequence in the first information. It should be noted that a length of the first bit sequence is related to the gain index information of the LNA. For another example, the first device may indicate the gain index information of the VGA by using a second bit sequence. It should be noted that a length of the second bit sequence is related to the gain index information of the VGA. For another example, the first device may carry the gain index information of the LNA by using a first bit sequence in the first information, and carry the gain index information of the VGA by using a second bit sequence in the first information.

In another example, the first device may combine the gain index information of the LNA and the gain index information of the VGA into one piece of AGC, and send the AGC to the second device. In other words, the AGC may indicate the gain index information of the LNA and the gain index information of the VGA by using a third bit sequence in the first information. It may also be understood as that the AGC may indicate AGC by using the third bit sequence in the first information. For example, a value of the third bit sequence is related to both the gain index information of the LNA and the gain index information of the VGA. For example, it is assumed that the LNA of the first device has two gain indexes: 1 and 2, and the VGA of the first device has 32 gain indexes: 1 to 32. To combine the gain index information of the LNA and the gain index information of the VGA into one piece of AGC, the AGC may be divided into 1 to 64. In this case, for the AGC indicated by the third bit sequence, refer to Table 1. When the AGC ranges from 1 to 32, it indicates that the gain index of the LNA is 1, and the gain index of the VGA ranges from 1 to 32. Specifically, it is assumed that the AGC is 3. It is considered that the gain index of the LNA is 1, and the gain index of the VGA is 3. It is assumed that a gain index of the AGC is 32. It is considered that the gain index of the LNA is 1, and the gain index of the VGA is 32. The rest can be deduced by analogy. When the AGC ranges from 33 to 64, it is considered that the gain index of the LNA is 2, and the gain index of the VGA ranges from 1 to 32. Specifically, it is assumed that the AGC is 34. It is considered that the gain index of the LNA is 2, and the gain index of the VGA is 2.

It may be understood that a length of the third bit sequence may be related to both the gain index information of the LNA and the gain index information of the VGA.

In another example, the AGC saturation information may include either AGC saturation or AGC non-saturation. Optionally, when the AGC is not saturated, the first information may not carry the AGC saturation information. When the AGC is saturated, the first information may carry indication information of the AGC saturation. The AGC saturation may be understood as that a gain of a sensing measurement link is excessively large due to excessively large adjustment of the AGC. It may be understood that the AGC may amplify amplitude of a signal. If adjustment of the AGC is excessively large, in other words, the amplitude of the signal is excessively amplified by the AGC, peak disappearing effect occurs when the signal passes through an analog-to-digital converter (ADC), in other words, a part of the amplitude of the signal becomes a straight line. For example, the amplitude of the signal may be considered as a parabola. If adjustment of the AGC is excessively large, the top of the parabola becomes a straight line, and a vertical coordinate value of the straight line is less than a vertical coordinate value of the vertex of the original parabola. This has great impact on determining of a channel change. The AGC non-saturation may be understood as that adjustment of the AGC is within a normal range. The normal range may vary with different devices.

The AGC jump information may include either an AGC jump or an AGC non-jump. Optionally, when the AGC jump does not occur, the first information may not carry the AGC jump information. It should be noted that the AGC jump may be understood as that the gain index of the AGC changes, and the AGC non-jump may be understood as that the gain index of the AGC does not change. For example, when the AGC jump occurs, the first information may include indication information of the AGC jump. Optionally, when the AGC jump does not occur, the first information may not include the gain index information of the AGC, for example, the gain index information of the LNA and the gain index information of the VGA.

In another example, the AGC change information may indicate that an AGC change exceeds a first threshold or an AGC change does not exceed a first threshold. When the AGC change exceeds the first threshold, adjustment of a gain of the receiver is excessively large. The AGC change may include a gain index change of the LNA and/or a gain index change of the VGA. It should be noted that a receiving moment of the second PPDU is before a receiving moment of the first PPDU. The gain index change of the VGA may be understood as a difference between a gain index of the VGA obtained when the first PPDU is received and a gain index of the VGA obtained when the second PPDU is received, an absolute value of the difference, a ratio of the gain index of the VGA obtained when the first PPDU is received to the gain index of the VGA obtained when the second PPDU is received, or the like.

The first threshold may be user-defined, for example, the first threshold is equal to 2 or 3. When the gain index change of the LNA exceeds the first threshold, the gain index change of the VGA exceeds the first threshold, or a sum of the gain index change of the LNA and the gain index change of the VGA exceeds the first threshold, it may be considered that the AGC change exceeds the first threshold. When the AGC change exceeds the first threshold, the first information may include the AGC change information, to indicate that the AGC change exceeds the first threshold. When the AGC change does not exceed the first threshold, the first information may not include the AGC change information, or the first information may include the AGC change information, to indicate that the AGC change does not exceed the first threshold.

In another example, the first indication information may indicate that AGC is excessively small or AGC is not excessively small. The excessively small AGC may be understood as that a gain of the AGC on the PPDU is excessively small, and consequently the PPDU cannot be effectively sampled when the PPDU on which AGC is performed reaches the ADC. The excessively small AGC may be that amplitude or energy of a signal (for example, the PPDU), namely, a signal to be processed by the ADC, obtained through the AGC is less than a threshold. The threshold may be preset. When the AGC is excessively small, the first information may include the first indication information, to indicate that the AGC is excessively small. When the AGC is not excessively small, the first information may not include the first indication information, or the first information may include the first indication information, to indicate that the AGC is not excessively small.

According to the foregoing solutions, the first device may send the AGC to the second device, so that the second device can learn of adjustment of a gain or power of the sensing measurement link. Therefore, when the second device processes CSI, the adjustment of the gain or the power of the sensing measurement link may be considered, to improve sensing performance.

In a possible implementation, the first device may alternatively perform channel estimation based on the received PPDU, to obtain the CSI. The first device may send the CSI to the second device. Optionally, the first device may send the first information and the CSI to the second device in S202.

In a possible case, the second device may process the CSI. It may be understood that, because the first device feeds back the first information, the second device may process the CSI based on the first information. For example, if the second device determines that the first information in S202 includes the AGC saturation, that is, AGC saturation occurs when the first device receives the PPDU corresponding to the CSI, the second device may choose not to use the CSI for sensing. For another example, after receiving a plurality of CSI feedbacks, the second device may select CSI corresponding to the same AGC for processing. For example, CSI that is sent by the first device and that corresponds to the same AGC is selected for processing, to eliminate impact caused by the AGC jump. Alternatively, the second device may further compensate for a jump of the gain index of the AGC by using the AGC, for example, the gain index information of the LNA and the gain index information of the VGA, included in the first information in S202, to enhance sensing performance.

It may be understood that the second device may compensate for the jump of the gain index of the AGC based on error information of the AGC. The error information of the AGC may be indicated by the first device. In other words, optionally, the second device receives the error information of the AGC from the first device. For example, the first device may perform AGC self-alignment. It should be noted that a specific manner of the AGC self-alignment is not limited in embodiments of this application. The AGC self-alignment manner may be predefined or may be determined based on different communication environments.

The first device may obtain the error information of the AGC through the AGC self-alignment. The error information of the AGC may include error information corresponding to each piece of AGC. For example, the error information of the AGC may include an error corresponding to gain index information of each LNA, and/or an error corresponding to gain index information of each VGA. The following describes the error information of the AGC by using Table 2.

**Table 2: Example of error information of AGC**

| Gain index of an LNA | Error | Gain index of a VGA | Error |
|---|---|---|---|
| n | x dB | m | x1 dB |
| | | m+1 | y1 dB |
| n+1 | y dB | m | x2 dB |
| | | m+1 | y2 dB |

In Table 2, it is assumed that the LNA has N (n=1, 2, ..., or N) gain indexes, and the VGA has M (m=1, 2, ..., or M) gain indexes. N and M are positive integers. The gain indexes obtained through alignment correspond to different errors. It may be understood that Table 2 is used as an example of the error information of the AGC, and a form of the error information of the AGC is not specifically limited in embodiments of this application. For example, the gain index n of the LNA may correspond to an error of x dB, and the gain index n+1 of the LNA may correspond to an error of y dB. It may be understood that x and y may be real numbers. For another example, the gain index n of the LNA and the gain index m of the VGA correspond to an error of x1 dB, the gain index n of the LNA and the gain index m+1 of the VGA correspond to an error of y1 dB, the gain index n+1 of the LNA and the gain index m of the VGA correspond to an error of x2 dB, and the gain index n+1 of the LNA and the gain index m+1 of the VGA correspond to an error of y2 dB. It may be understood that x1, y1, x2, and y2 are real numbers.

According to the foregoing solutions, the first device may send the error information of the AGC to the second device. Therefore, when obtaining the AGC obtained when the first device receives the PPDU, the second device compensates for the AGC based on the error information of the AGC, to improve sensing performance.

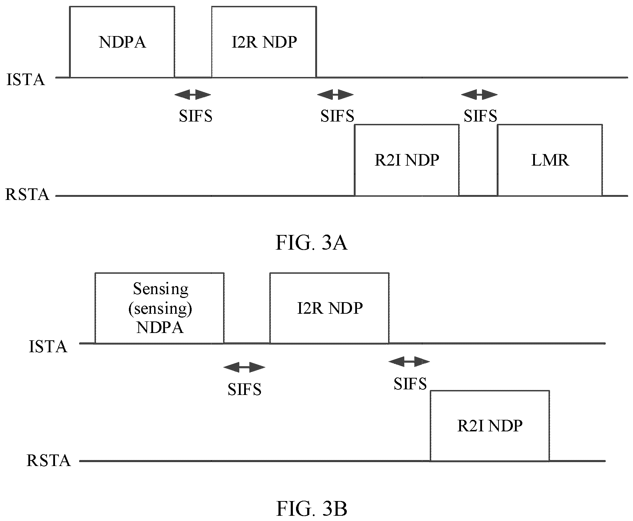

In a possible implementation, the first device and the second device may negotiate whether the first information needs to be fed back. The following uses FIG. 3A to FIG. 3E as examples to describe different sensing procedures.

Refer to FIG. 3A. In the procedure, an initiator STA (initiator STA, ISTA) first sends a null data packet announcement (null data packet announcement, NDPA) frame. The NDPA frame may carry information about a null data packet (null data packet, NDP). After a short interframe space (short interframe space, SIFS), the ISTA sends an I2R NDP to a responder STA (responder STA, RSTA) for measurement. After another SIFS, the RSTA sends an R2I NDP to the ISTA for measurement. After still another SIFS, the RSTA sends location measurement report (location measurement report, LMR) information to the ISTA. The ISTA may determine a motion status of the RSTA based on the LMR information.

Optionally, the NDPA frame sent by the ISTA may carry request information of the first information. The request information of the first information may be used to request the first information from the RSTA. In other words, after receiving the I2R NDP, the RSTA may send, to the ISTA based on the request information of the first information, first information obtained when the I2R NDP is received. In this case, AGC indicated by the first information indicates a gain index of the AGC obtained when the I2R NDP is received.

Refer to FIG. 3B. In the procedure, the ISTA sends a sensing (sensing) NDPA frame to the RSTA. After an SIFS, the ISTA may send an I2R NDP to the RSTA. After another SIFS, the RSTA may send an R2I NDP to the ISTA. Optionally, the sensing NDPA frame sent by the ISTA may carry request information of the first information.

It may be understood that, in the sensing procedure shown in FIG. 3B, which party performs sensing measurement and whether a CSI feedback is required are not shown. In embodiments of this application, which party performs sensing measurement and whether a CSI feedback is required are not specifically limited. Optionally, in the procedure shown in FIG. 3B, after receiving the R2I NDP, the RSTA may perform sensing measurement to obtain CSI, and send the CSI to the ISTA.

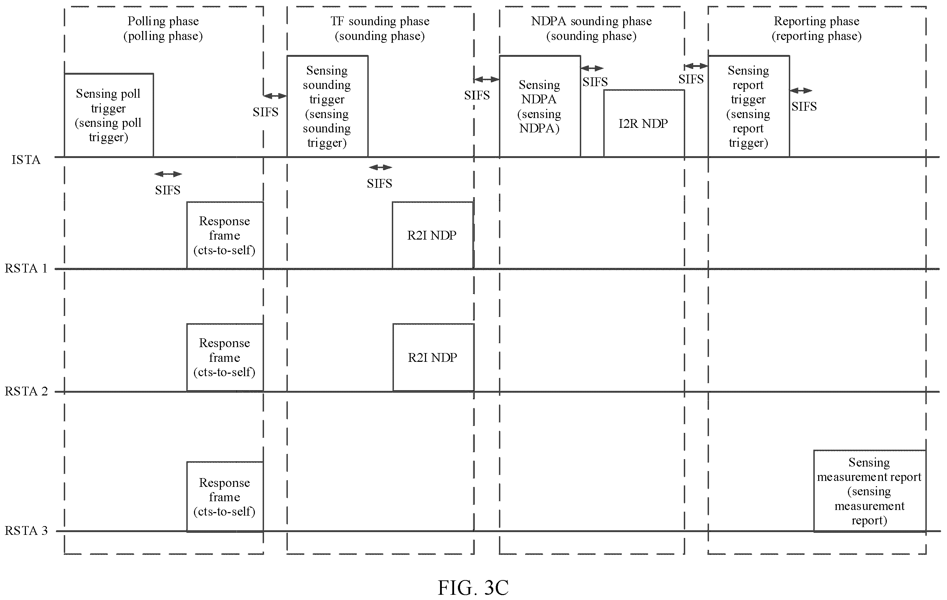

Refer to FIG. 3C. In the procedure, the ISTA may trigger a plurality of RSTAs to perform the sensing procedure. As shown in FIG. 3C, in a polling phase (polling phase), the ISTA may send a sensing poll trigger (sensing poll trigger) frame to an RSTA 1 to an RSTA 3, to trigger the RSTA 1 to the RSTA 3 to perform the sensing procedure. The RSTA 1 to the RSTA 3 may respectively send response frames (cts-to-self) to the ISTA. Optionally, the sensing poll trigger frame may carry request information of the first information.

In a trigger frame (trigger frame, TF) sounding phase (sounding phase), the ISTA may trigger the RSTA 1 and the RSTA 2 to send R2I NDPs. The ISTA may send sensing sounding trigger (sensing sounding trigger) frames to the RSTA 1 and the RSTA 2 respectively. The RSTA 1 and the RSTA 2 may respectively send the R2I NDPs to the ISTA. The ISTA may perform sensing measurement based on the two NDPs, to obtain CSI and a sensing result. The sensing sounding trigger (sensing report trigger) frames are sent to the RSTA 1 and the RSTA 2. The RSTA 1 and the RSTA 2 may respectively send the R2I NDPs to the ISTA. The ISTA may perform sensing measurement based on the two NDPs, to obtain CSI and a sensing result.

In an NDPA sounding phase (sounding phase), the ISTA may send a sensing NDPA frame to the RSTA 3. The ISTA may send an I2R NDP to the RSTA 3. The RSTA 3 may perform sensing measurement based on the NDP. In a reporting phase (reporting phase), the ISTA may trigger the RSTA 3 to send a sensing measurement report. The ISTA may send a sensing report trigger (sensing report trigger) frame to the RSTA 3. The RSTA 3 may send a sensing measurement report (sensing measurement report) to the ISTA. Optionally, the sensing report trigger frame may carry request information of the first information.

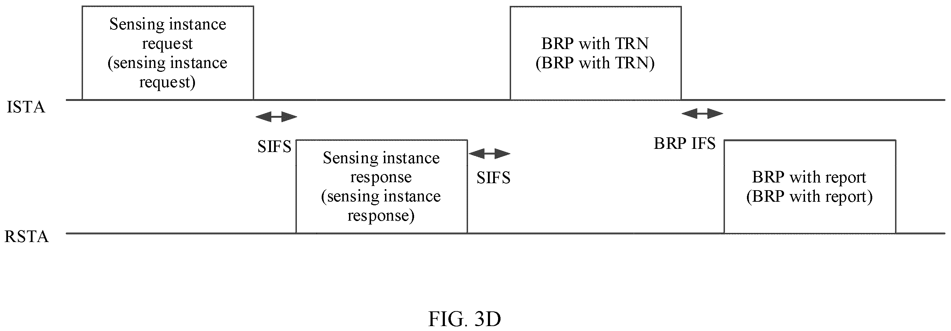

Refer to FIG. 3D. In a possible case, the ISTA may send an instance request frame (instance request frame) to the RSTA. The instance request frame may be used to request to set up or initiate a sensing measurement instance. It may be understood that the sensing measurement instance may be used to identify one sensing measurement. The RSTA may send an instance response frame (instance response frame) to the ISTA. The instance response frame may indicate that the sensing measurement instance is agreed to be set up. Optionally, the instance request frame may include request information of the first information.

In another possible case, after the ISTA and the RSTA set up or initiate the sensing measurement instance based on the instance request frame and the instance response frame, the ISTA may send, to the RSTA, a beam refinement protocol (beam refinement protocol, BRP) frame, for example, a BRP frame with a training field (training field, TRN) (BRP with TRN) shown in FIG. 3D. The RSTA may perform sensing measurement based on the TRN. The RSTA may send a BRP frame with a report (BRP with report) to the ISTA. Optionally, the BRP frame with the training field may include request information of the first information.

In the two cases, the ISTA and the RSTA set up or initiate the sensing measurement instance, so that the ISTA may transmit an NDP with the RSTA for sensing measurement (not shown in the figure). For example, the sensing initiator, namely, the ISTA, is a sensing transmitter, and the sensing responder, namely, the RSTA, is a sensing receiver. In the procedure, the ISTA may send an I2R NDP to the RSTA for sensing measurement.

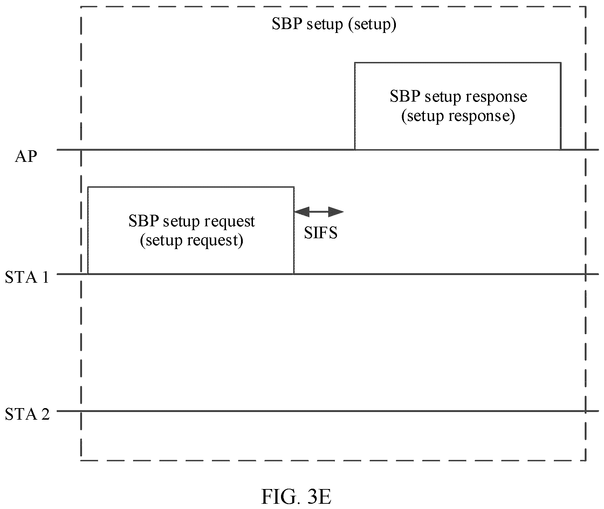

Refer to FIG. 3E. A sensing by proxy (sensing by proxy, SBP) procedure is described. Sensing by proxy may be understood as that the sensing initiator requests the sensing responder as a proxy device to perform sensing measurement with a third-party device. The third-party device may be a device different from the sensing initiator, and the sensing responder, namely, the proxy device, serves as the sensing transmitter. Optionally, in the sensing by proxy process, the sensing initiator may also participate in sensing by proxy as the sensing receiver. In this procedure, an STA 1 is an SBP sensing initiator, and an AP is an SBP sensing responder. In this procedure, the STA 1 may request the AP to perform sensing by proxy. For example, the STA 1 may send an SBP setup request (setup request) or an SBP request (SBP request) to the AP. The AP may send an SBP setup response (setup response) or an SBP response (SBP response) to the STA 1, to agree to perform sensing by proxy or disagree to perform sensing. In an embodiment shown in FIG. 3E, if the AP agrees to perform sensing by proxy, the AP may transmit an NDP with an STA 2, to obtain a sensing result. The STA 2 may be a sensing receiver. Optionally, the AP may alternatively transmit an NDP with the STA 1, to obtain a sensing result. The AP may send the sensing result and the first information to the STA 1. Optionally, the SBP request or the SBP setup request may carry request information of the first information.

It may be understood that, in embodiments shown in FIG. 3A to FIG. 3E, there may be one or more sensing receivers.

In addition to FIG. 3A to FIG. 3E, the first device and the second device may further initiate a sensing procedure based on a measurement setup request frame (measurement setup request frame). In an example, the second device may send a measurement setup request frame (measurement setup request frame) to the first device. The measurement setup request information may be used to request to set up sensing measurement, and exchange a related parameter for subsequent sensing. Optionally, the measurement setup request information may include a request message of the first information. It may be understood that the request message of the first information may be used to request the first device to send the first information to the second device. For example, the request message of the first information may be used to request the first device to send the first information to the second device when sending the CSI. The first device may send a measurement setup response frame (measurement setup response frame) to the second device. Measurement setup response information may indicate that sensing measurement is agreed to be performed.

For example, the method for sending the first information by the first device in S202 may include any one or more of the following case 1 or case 2.

### Case 1:

In the case 1, the first device may add the first information to a CSI frame (frame). For example, the first device may perform channel estimation based on the received PPDU in S201, to obtain CSI, and send the CSI to the second device by using the CSI frame. The first device may add, to the CSI frame, the AGC obtained when the PPDU is received.

HT is used as an example. A structure of an action field in a CSI frame of the HT is shown in Table 3.

**Table 3: Format of a field in a CSI frame of HT (HT CSI frame action field format)**

| Order (order) | Information (information) |
|---|---|
| 1 | Category (category) |
| 2 | HT action (HT action) |
| 3 | Multiple input multiple output control (MIMO control) |
| 4 | CSI report (CSI report) |
| 5 | AGC |

As shown in Table 3, an AGC field may be newly added to the CSI frame to carry the AGC, as shown in a fifth row in Table 3. It may be understood that a location of the AGC field in the CSI frame is not specifically limited in this application. The location of the AGC field in Table 3 is shown as an example. For example, the AGC field may alternatively be located before the CSI report field, that is, the AGC field may be located in a fourth row, a third row, a second row, a first row, or the like in the CSI frame. This is not specifically limited in this application.

In a possible case, the first device may add the AGC to the CSI report field (the fourth row in Table 3). The following describes, by using Table 4, a manner of adding the AGC to the CSI report field. Table 3 shows a format of a CSI report field in a CSI matrix feedback in the HT standard. It should be noted that when the first device or the second device does not support a CSI matrix as a feedback type, information about the CSI matrix may be processed, to obtain information in a form other than a CSI matrix. In other words, a specific format and a quantization manner of CSI in the CSI report field are not specifically limited in embodiments of this application, provided that the CSI report field may carry the first information.

**Table 4: CSI report field (CSI report field)**

| Field (field) | Size (size) (bits) | Meaning (meaning) |
|---|---|---|
| Signal-to-noise ratio (signal-to-noise ratio, SNR) (SNR in receive chain 1) of a receive chain 1 | 8 | Signal-to-noise ratio (Signal-to-noise ratio in the first receive chain of the STA sending the report) of a first receive chain used by a STA to send a CSI report |
| ... | ... | ... |
| LNA | 3 and 4 bits | Gain index value of an LNA (value of the LNA) |
| VGA | 6 to 8 bits | Gain index value of a VGA (value of the VGA) |
| AGC saturation (saturation) | 1 | Saturation or non-saturation (saturation or not) |
| AGC jump | 1 | Jump or non-jump |

As shown in Table 4, the first information may be carried in the CSI report field. It may be understood that the first information shown in Table 4 is shown as an example, and does not constitute a limitation on the first information. For example, the first information may include at least one of the gain index information of the LNA and the gain index information of the VGA. For another example, when the AGC is not saturated, the first information may not include the AGC saturation information. In addition, a size of the first information shown in Table 4 is shown as an example, and is not specifically limited in embodiments of this application. For example, the size of the LNA in Table 4 is 3 bits or 4 bits, and the 3 bits and 4 bits are merely used as an example of the size of the LNA, and do not constitute a limitation on the size of the LNA. The size of the LNA may be more bits, for example, 5 bits or 6 bits. Alternatively, the size of the LNA may be less bits, for example, 1 bit or 2 bits.

It may be understood that a location of the first information in the CSI report field is not specifically limited in this application. The location of the first information shown in Table 4 is merely shown as an example.

Optionally, the first device may add the first information to the MIMO control field (the third row in Table 3). For an implementation, refer to the descriptions of adding the first information to the CSI report field. Details are not described herein again.

It may be understood that when the first device may add the first information to a field, for example, the CSI report field or the MIMO control field, in the CSI frame, the first device may add the first information to a newly added field in the field. Optionally, the first device may add the first information to a reserved (reserved) field in the field. For example, the first device may add the first information to a reserved field in the MIMO control field.

It may be understood that the first information may be added to another frame and sent to the second device. For example, the first information may be carried in a feedback frame, for example, a sensing measurement report frame shown in Table 5.

**Table 5: Structure of a protected sensing measurement report frame**

| Order | Information |
|---|---|
| 1 | Category (category) |
| 2 | Protected sensing action (protected sensing action) frame |
| 3 | Dialog token (dialog token) |
| 4 | Sensing measurement report (sensing measurement report) |
| 5 | AGC |

As shown in Table 5, an AGC field may be newly added to the sensing measurement report frame to carry the AGC, as shown in a fifth row in Table 5. It may be understood that a location of the AGC field in the CSI frame is not specifically limited in this application. The location of the AGC field in Table 5 is shown as an example.

Optionally, a sensing measurement report field may include one or more sensing measurement report elements. Table 5 shows an example in which the sensing measurement report field includes one sensing measurement report element. In a possible case, the sensing measurement report field shown in Table 5, as shown in the fourth row in Table 5, carries one or more sensing measurement report elements (sensing measurement report element). A structure of the sensing measurement report element may be shown in Table 6.

**Table 6: Example of a structure of a sensing measurement report element**

| Field name | Meaning |
|---|---|
| Element identifier (element ID) | Element ID |
| Length (length) | Element length |
| Element ID extension (element ID extension) | Element ID extension |
| Sensing measurement report type (sensing measurement report type) | Indicates a type of the sensing measurement report element |
| Sensing measurement report control (sensing measurement report control) | Carries related information required by a sensing measurement report |
| Sensing measurement report (sensing measurement report) | Carries specific information of the sensing measurement report |

As shown in Table 6, the first information may be carried in the sensing measurement report element. For example, the first information may be carried in the sensing measurement report control field, as shown in a fifth row in Table 6. In other words, the sensing measurement report control field may carry the first information and related information of the sensing measurement report. Alternatively, the first information may be carried in the sensing measurement report field, as shown in a sixth row in Table 6. In other words, the sensing measurement report field may carry the first information and specific information of the sensing measurement report.

The first device may send, based on the case 1, the CSI frame carrying the AGC to the second device. When receiving the CSI frame, the second device may process the CSI in the CSI frame based on the AGC, to obtain the sensing result.

The CSI frame and the feedback frame in the case 1 are shown as an example in which the first information may be carried. In embodiments of this application, the AGC may further be carried in another sensing feedback type. In other words, the first device may further add the AGC to a feedback type for sending the CSI, to facilitate the second device to perform sensing based on the AGC.

It may be understood that the manner shown in the case 1 may be used in a low-frequency scenario, for example, a 20 MHz bandwidth scenario. The following describes, based on the case 2, a transmission manner of the first information in a high-frequency scenario, for example, a 60 MHz bandwidth scenario.

### Case 2:

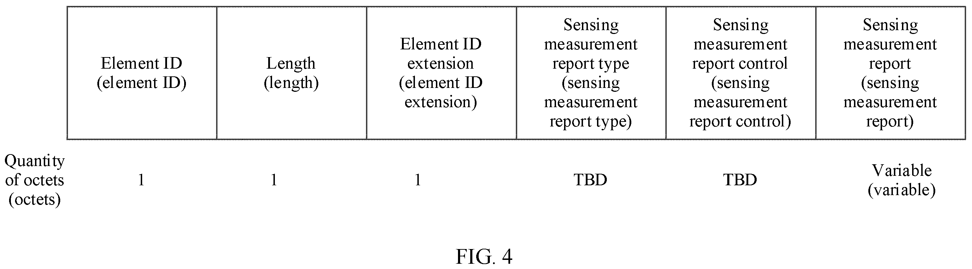

In the case 2, the first device may add the first information to a DMG sensing report element (sensing report element). The following describes a structure of a current DMG sensing report element by using FIG. 4.

As shown in FIG. 4, the DMG sensing report element may include one or more of the following fields: an element ID field, an element length field, an element ID extension field, a directional multi-gigabit (directional multi-gigabit, DMG) measurement program ID field or a DMG measurement setup ID (DMG measurement setup ID) field, a DMG burst ID (DMG burst ID) field, a DMG sensing instance ID (DMG sensing instance ID) field or a DMG sensing instance number (DMG sensing instance number) field, a DMG sensing report type (DMG sensing report type) field, a DMG sensing report control (DMG sensing report control) field, or a DMG sensing report (DMG sensing report) field, and the like.

For example, the DMG measurement program ID field or the DMG measurement setup ID field is used to identify one DMG measurement program, and each DMG measurement program may include one or more DMG bursts. The DMG burst ID field is used to identify one DMG burst, and each DMG burst may include one or more DMG sensing instances. The DMG sensing instance ID field is used to identify one DMG sensing instance, and each DMG sensing instance ID field or each DMG sensing instance number field indicates one sensing measurement.

For example, a DMG measurement program ID 01 field may include 10 DMG bursts: a DMG burst 1 to a DMG burst 10. The DMG burst 1 may include five DMG sensing instances: a DMG sensing instance 1 to a DMG sensing instance 5. When the first device and the second device complete the DMG sensing instance 1 to the DMG sensing instance 5, it may be considered that the first device and the second device complete the DMG burst 1. Then, the first device and the second device may complete the DMG burst 2, and the rest can be deduced by analogy. When the first device and the second device complete the DMG burst 10, it may be considered that the first device and the second device complete a DMG measurement program 01.

In an example, an AGC field may be newly added to the DMG sensing report element to carry the first information. It may be understood that a location of the AGC field in the DMG sensing report element is not specifically limited in this application. For example, the AGC field may be located after the DMG sensing report (DMG sensing report) field, or may be located after the DMG sensing report control (DMG sensing report control) field and before the DMG sensing report field.

In another example, the first information may be carried in a field of the DMG sensing report element, for example, may be carried in the DMG sensing report control (DMG sensing report control) field. In other words, the DMG sensing report control (DMG sensing report control) field may carry the first information and related information used to interpret the DMG sensing report (DMG sensing report) field.

In a possible case, if the AGC is adjusted in each DMG sensing instance, the AGC corresponds to each DMG sensing instance. For example, if the DMG sensing report element in FIG. 4 carries a sensing result of only one DMG sensing instance, AGC of the DMG sensing report control field is used to describe a sensing measurement corresponding to the DMG sensing instance. For another example, the AGC may alternatively be carried in the DMG sensing report field.

In another possible case, if the AGC is stable in a same sensing burst, that is, the AGC remains unchanged in the same sensing burst, and is adjusted in different DMG bursts, the AGC needs to correspond to each DMG burst. For example, if the DMG sensing report element in FIG. 4 includes a sensing result of one DMG burst, the sensing result of the DMG burst corresponds to sensing results of one or more DMG sensing instances included in the DMG burst, and AGC of the plurality of DMG sensing instances included in the DMG burst remains unchanged, AGC of the DMG sensing report control field is used to describe a sensing measurement corresponding to the DMG burst. However, if the AGC changes in a measurement process of the plurality of DMG sensing instances included in the DMG burst, the foregoing case in which the AGC corresponds to each DMG sensing instance may need to be used for feedback. Alternatively, a plurality of different pieces of AGC of the DMG burst may be jointly fed back. For example, a field is newly added to the DMG sensing measurement report element to carry the jointly fed-back AGC.

In still another possible case, if the AGC is stable in a same DMG measurement program, and is adjusted in different DMG measurement programs, the AGC needs to correspond to the DMG measurement program. For example, if the sensing report element in FIG. 4 includes a sensing result of one DMG measurement program, and AGC of a plurality of DMG bursts included in the DMG measurement program remains unchanged, AGC of the DMG sensing report control field is used to describe a sensing measurement corresponding to the DMG measurement program.

Similarly, if AGC of a same DMG measurement program is unstable, the foregoing case in which the AGC needs to correspond to each DMG burst or the foregoing case in which the AGC needs to correspond to each DMG sensing instance is returned to based on whether the DMG burst is stable. Alternatively, a plurality of different pieces of AGC in the DMG measurement program may be jointly fed back, and a field is newly added to the DMG sensing measurement report element to carry the jointly fed-back AGC.

The first device may send, based on the case 2, the DMG sensing measurement report element carrying the AGC to the second device. When receiving the DMG sensing measurement report element, the second device may process, based on the AGC, a DMG sensing measurement report included in the DMG sensing measurement report element, to obtain the sensing result.

It may be understood that the DMG sensing measurement report element in the case 2 is shown as an example in which the first information may be carried. In embodiments of this application, the AGC may further be carried in another sensing feedback type. For example, the first device may alternatively add the first information to a DMG channel measurement feedback element (DMG channel measurement feedback element) or an EDMG channel measurement feedback element (EDMG channel measurement feedback element).

Optionally, the first information may alternatively be carried in the LMR shown in FIG. 3A. Alternatively, the first information may be carried in the sensing measurement report sent by the RSTA 3 to the ISTA in the reporting phase shown in FIG. 3C.

Optionally, when receiving the PPDU, the receiver may receive the PPDU by using one fixed AGC. In other words, the receiver does not adjust the AGC when receiving the PPDU, or the receiver receives different PPDUs by using the same AGC. For example, the receiver may negotiate with the transmitter to receive the PPDU by using a fixed AGC. It may be understood that the fixed AGC may be customized or determined by the receiver, or may be indicated by the transmitter. For example, the transmitter may send second indication information to the receiver. The second indication information indicates one piece of AGC, and the receiver may receive the PPDU based on the AGC. Optionally, the transmitter may indicate a period of time to the receiver, or the transmitter may send a timer to the receiver. Within the period of time or before timing of the timer ends, the receiver may receive the PPDU by using the AGC indicated by the transmitter.

In an example, the transmitter may add the second indication information to the NDPA frame shown in FIG. 3A, the NDPA frame shown in FIG. 3B, or the sensing poll trigger frame, the response frame, or the sensing NDPA frame shown in FIG. 3C. Optionally, the transmitter may alternatively add the indication information of the AGC to the sensing instance request, the sensing instance response, the BRP frame with the TRN, or the BRP frame with the report shown in FIG. 3D.

In another example, after receiving the second indication information, the receiver may receive the PPDU based on the AGC indicated by the second indication information. However, the fixed AGC may cause some impact on receiving of the PPDU. Therefore, optionally, the receiver may send the AGC saturation information or the first indication information to the transmitter. For the AGC saturation information and the first indication information, refer to related descriptions in the embodiment shown in FIG. 2.

Optionally, the transmitter may trigger an update of the AGC of the receiver. In other words, the transmitter may trigger the receiver to receive the PPDU by using updated AGC. For example, if the transmitter receives indication information of the AGC saturation or the first indication information for a plurality of times within a period of time, the transmitter may consider that the fixed AGC is not conducive to receiving of the PPDU, and greatly affects sensing performance. Therefore, the transmitter may indicate, to the receiver, the update of the AGC. For example, the transmitter may indicate new AGC to the receiver, or the transmitter may indicate the receiver to determine new AGC.

It should be noted that according to the embodiment shown in FIG. 2, the first device may send the AGC to the second device, so that the second device can learn of adjustment of a gain of the receiver in a gain of the sensing measurement link. Therefore, when the second device processes the CSI, adjustment of the gain of the sensing measurement link may be considered, to improve sensing performance.

However, not only the adjustment of the gain of the receiver affects sensing performance, but the adjustment of the gain or the power of the transmitter also affects sensing performance. For the transmitter, adjustment of actual transmit power also affects the sensing result. In the procedures shown in FIG. 3A and FIG. 3B, the NDPA frame may include a target RSSI (target RSSI). The target RSSI indicates desired received power of the receiver when receiving the NDP. To meet a requirement of the target RSSI, the ISTA needs to adjust actual transmit power of the NDP.

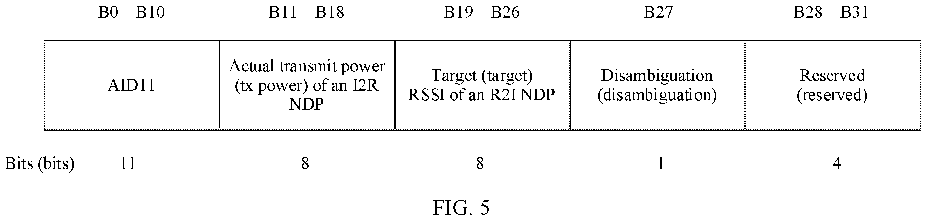

FIG. 5 is an example diagram of a structure of STA information of an NDPA frame. In FIG. 5, an I2R NDP indicates an NDP sent by the ISTA to the RSTA, and an R2I NDP indicates an NDP sent by the RSTA to the ISTA.

It can be seen from FIG. 5 that the STA information includes actual transmit power (tx power) of the I2R NDP and a target RSSI (target RSSI) of the R2I NDP. The actual transmit power of the I2R NDP is mainly used to describe the actual transmit power of the NDP sent by the ISTA. The target RSSI of the R2I NDP indicates desired received power of the ISTA when receiving the R2I NDP. The RSTA may adjust the actual transmit power of the NDP based on a measured path loss (path loss) and the RSSI, so that the ISTA receives the R2I NDP by using the RSSI.

In the foregoing solutions, desired received power of a signal is mainly specified based on the RSSI. However, during sensing, a moving target usually exists in an environment, and motion of the object causes a more violent change of the environment and a more frequent change of a path loss. To enable the NDP to be received as the RSSI, the actual transmit power of the NDP changes more frequently. However, the change of the actual transmit power causes an error to the sensing result.

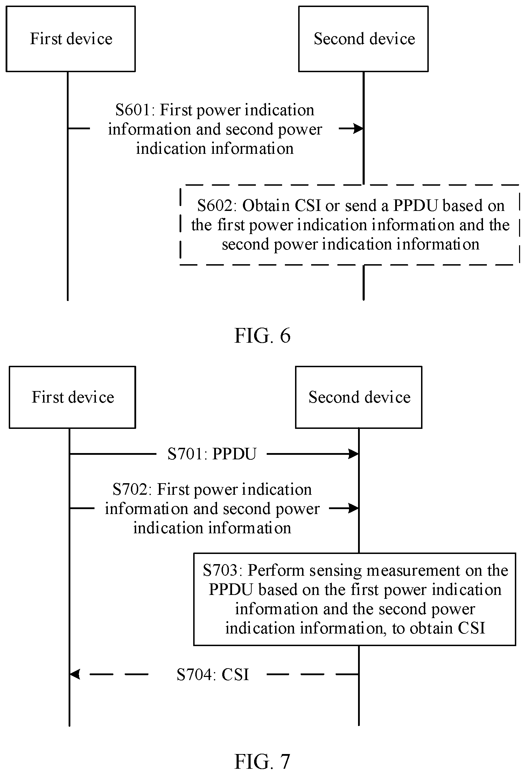

In view of this, an embodiment of this application provides another signal transmission method. FIG. 6 is an example flowchart of a signal transmission method according to an embodiment of this application. The method may include the following operations. In an embodiment shown in FIG. 6, a sensing initiator is a sensing receiver, and in the embodiment shown in FIG. 2, the sensing initiator is the sensing transmitter. It may be understood that for some parameters and terms in the embodiment shown in FIG. 6, refer to related descriptions in the embodiment shown in FIG. 2.

S601: A first device sends first power indication information and second power indication information to a second device.

Correspondingly, the second device receives the first power indication information and the second power indication information from the first device.

It may be understood that the first power indication information and the second power indication information indicate power of a same PPDU. The PPDU may be used for sensing measurement. First power indicated by the first power indication information may be different from second power indicated by the second power indication information.

Optionally, the embodiment shown in FIG. 6 may further include the following operation.

S602: The second device obtains CSI or sends the PPDU based on the first power indication information and the second power indication information.

For example, when the first device is a sensing receiver, the second device may serve as a sensing transmitter. The second device may send the PPDU based on the first power indication information and the second power indication information. In this way, the first device may receive the PPDU from the second device.

For another example, when the first device is a sensing transmitter, the second device may serve as a sensing receiver. The second device may obtain the CSI based on the first power indication information and the second power indication information. Optionally, the second device may send the CSI to the first device, so that the first device may process the CSI to obtain a sensing result.

According to the foregoing solutions, the first device may indicate, to the second device, the power, namely, the first power and the second power, of the same PPDU, so that the second device may send the PPDU or generate the CSI based on the first power and the second power. This can reduce impact caused by a jump of actual transmit power of the PPDU on the sensing result, and improve sensing performance.

In the embodiment shown in FIG. 6, the sensing initiator may be the sensing receiver.

The following separately uses two cases in which the first device is the sensing transmitter and the first device is the sensing receiver as examples for description.

Case a: The first device is the sensing transmitter.

As described above, the change of the actual transmit power may affect the sensing performance. The actual transmit power may include digital domain power and RF power. In a possible case, even if the actual transmit power does not change, occurrence of a relative change on the digital domain power or the RF power also affects the sensing result. For example, actual transmit power of a PPDU transmitted for the second time does not change compared with the actual transmit power of the PPDU transmitted for the first time, but digital domain power of the PPDU transmitted for the second time changes compared with digital domain power of the PPDU transmitted for the first time, which also affects the sensing result and sensing performance. It may be understood that, because the actual transmit power of the PPDU transmitted for the second time does not change, but the digital domain power of the PPDU transmitted for the second time changes, it may be learned that analog domain power of the PPDU transmitted for the second time changes correspondingly, to enable the actual transmit power of the PPDU transmitted for the second time to remain unchanged.

In the case a, the first device may send the first power indication information and the second power indication information to the second device. The first power indicated by the first power indication information may be digital domain power of the PPDU. The second power indicated by the second power indication information may be the actual transmit power of the PPDU. In this way, the second device may sense changes of the digital domain power, the RF power, and the actual transmit power of the PPDU, to reduce impact on sensing performance.

The following describes a procedure of the case a by using FIG. 7. FIG. 7 is an example flowchart of an information transmission method according to an embodiment of this application. The method may include the following operations.

S701: A first device sends a PPDU to a second device.

Correspondingly, the second device receives the PPDU from the first device.

The PPDU in S701 may be used for sensing measurement. Optionally, before S701, the second device may request the first device to initiate a sensing procedure. For example, the second device may send sensing measurement request information to the first device. The first device may send response information to the second device. For example, the first device may send sensing measurement response information to the second device, to agree to perform sensing measurement. Details are not described herein again. Optionally, the sensing measurement request information or an instance request frame may carry a target (target) RSSI.

S702: The first device sends first power indication information and second power indication information to the second device.

Correspondingly, the second device receives the first power indication information and the second power indication information from the first device.

In S702, the first power indication information may indicate digital domain power of the PPDU in S701, namely, power to be processed by a DAC. Optionally, the digital domain power may indicate power in a 20 MHz bandwidth. Adjustment of the digital domain power mainly comes from digital domain, that is, the adjustment of the digital domain power of the PPDU occurs in the digital domain before the PPDU is processed by the DAC.

In S702, the second power indication information may indicate actual transmit power of the PPDU in S701. Optionally, the digital domain power may indicate average power of all antennas, used to transmit the PPDU, in a 20 MHz bandwidth, and is subject to antenna interface power.

In an example, when adjusting the actual transmit power of the PPDU, a sensing transmitter may preferentially adjust the digital domain power, and then adjust analog domain power. For example, when adjusting the actual transmit power to meet the RSSI, the sensing transmitter, for example, the first device, may preferentially adjust the digital domain power, so that the PPDU can meet the RSSI.

S703: The second device obtains CSI based on the first power indication information and the second power indication information.

In S703, when a PA is located in a good linear working region, the second device may perform corresponding processing based on interaction between the digital domain power and the actual transmit power.

For example, when the second device finds that the actual transmit power of the PPDU in S701 does not change compared with actual transmit power of a PPDU transmitted before S701, and the digital domain power of the PPDU in S701 does not change, the second device may consider that the actual transmit power of the first device remains stable. Therefore, the second device may obtain the CSI based on the PPDU in S701.

For example, when the second device finds that the actual transmit power of the PPDU in S701 changes compared with the actual transmit power of the PPDU transmitted before S701, and the digital domain power of the PPDU in S701 also changes compared with digital domain power of the PPDU transmitted before S701, the second device may consider that RF power of the PPDU does not change, and power adjustment mainly comes from the digital domain. In this way, the second device may obtain the CSI based on the PPDU in S701, and compensate for the CSI based on a change of the digital domain power. It may be understood that compensation performed by the second device on the CSI based on the change of the digital domain power is approximate to a linear model. In this example, the CSI obtained by the second device in S703 may be considered as CSI that is compensated for.

For example, the second device finds that the actual transmit power of the PPDU in S701 changes compared with the actual transmit power of the PPDU transmitted before S701, and the digital domain power of the PPDU in S701 also changes compared with the digital domain power of the PPDU transmitted before S701. However, a change of the actual transmit power of the PPDU in S701 is greater than a change of the digital domain power. It indicates that the actual transmit power of the PPDU changes greatly, and adjustment of only the digital domain power cannot meet the RSSI. Therefore, the second device may consider that the RF power of the PPDU also changes. In this way, the second device may obtain the CSI based on the PPDU in S701. The second device may compensate for the CSI based on the change of the digital domain power, and compensate for the CSI based on a change of the RF power. It may be understood that a manner in which the second device compensates for the CSI based on the change of the RF power is not specifically limited in this application. In this example, the CSI obtained by the second device in S703 may be considered as CSI that is compensated for.

The second device may determine, based on S703, the first power indication information, and the second power indication information, whether to compensate for the CSI. The second device may process the CSI, to obtain a sensing result. Optionally, the second device may send a sensing measurement report to the first device.

Optionally, an embodiment shown in FIG. 7 may further include the following operation.

S704: The second device sends the CSI to the first device.

Correspondingly, the first device receives the CSI from the second device.

The first device may process the CSI, to implement target sensing.

According to the foregoing solutions, the sensing transmitter may send the digital domain power and the actual transmit power to the sensing receiver. In this way, the sensing receiver may sense the change of the digital domain power and the change of the actual transmit power. Therefore, the sensing receiver may compensate for the CSI as much as possible, to eliminate impact caused by a power jump, and improve sensing performance.

The following describes transmission manners of the first power indication information and the second power indication information.

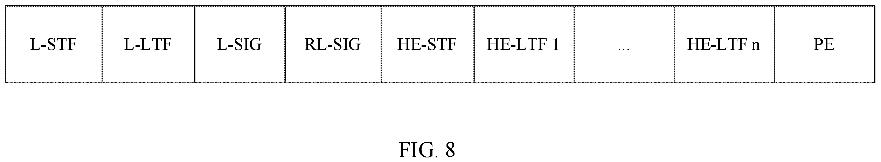

In an example, the first power indication information and the second power indication information may be carried in an LMR. As shown in FIG. 8, a field may be newly added to the LMR to carry the first power indication information. In FIG. 8, a location of the first power indication information in the LMR is shown as an example. The location of the first power indication information in the LMR is not specifically limited in embodiments of this application.

In another example, the first power indication information and the second power indication information may be carried in the sensing report trigger frame sent by the ISTA in the reporting phase shown in FIG. 3C.

Optionally, the first power indication information may be carried in a measurement setup request frame (measurement setup request frame).

It should be noted that the first power indication information may be carried in a newly added field of the LMR, the sensing report trigger frame, or the measurement setup request frame, or a reserved (reserved) field. It may be understood that the newly added field may be dedicated to carry the first power indication information.

It may be understood that the case a is applicable to a scenario in which the sensing transmitter needs to send the actual transmit power. In other words, when the sensing transmitter needs to send the actual transmit power, the sensing transmitter may further send the digital domain power.

For example, as shown in FIG. 3A or FIG. 3B, after sending the I2R NDP to the RSTA, the ISTA may send the first power indication information and the second power indication information to the RSTA. For another example, as shown in FIG. 3C, in the NDPA sounding phase, after sending the NDP to the RSTA 3, the ISTA may send the first power indication information and the second power indication information to the RSTA 3. For another example, as shown in FIG. 3E, the AP, as the proxy, may send the obtained sensing result and the received first power indication information and second power indication information to the STA 1.

For example, in a high-frequency scenario, the sensing transmitter may send an EDMG transmit power subelement (EDMG transmit power subelement) to the sensing receiver, to indicate the actual transmit power and maximum transmit power to the sensing receiver. The EDMG transmit power subelement may be carried in a link measurement request frame (link measurement request frame). Optionally, a field may be newly added to the link measurement request frame to carry the first power indication information, that is, indicating the digital domain power. Alternatively, the first power indication information may be carried in an existing field of the link measurement request frame. In other words, the first power indication information may reuse an existing field of the link measurement request frame.

It should be noted that, in this embodiment of this application, elements and specific frames that carry the first power indication information and the second power indication information are not specifically limited, and the link measurement request frame and the LMR are shown as examples.

### Case b:

It may be understood that the case b may be implemented in combination with the case a, or may be independently implemented. This is not specifically limited in this application.

The 802.11az standard is used as an example. A structure of an HE ranging (ranging) NDP used for ranging is shown in FIG. 8.

An HE-SIG-A field, an HE-STF field, an HE-LTF 1 field, an HE-LTF 2 field, an HE-LTF N field, and the like are fields used for sensing measurement. Similarly, a similar NDP structure is also used in the 802.11bf standard, and mainly includes a field used for sensing measurement and another field. The another field may be understood as a field, that is not used for sensing measurement, other than the field used for measurement.

In the case b, different portions of the PPDU may use different actual transmit power. For example, the field used for sensing measurement in the PPDU may use the first power indicated by the first power indication information, and the field that is not used for sensing measurement in the PPDU may be determined based on the second power indicated by the second power indication information. In this way, actual transmit power of the field used for measurement may be fixed, to reduce impact of the actual transmit power on the sensing result, and improve sensing performance.

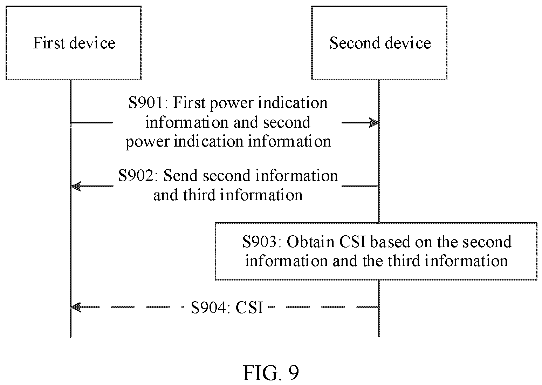

The following describes a procedure of the case b by using FIG. 9. FIG. 9 is an example flowchart of an information transmission method according to an embodiment of this application. The method may include the following operations.

S901: A first device sends first power indication information and second power indication information to a second device.

Correspondingly, the second device may receive the first power indication information and the second power indication information from the first device.

Optionally, because the first device is a sensing initiator, the first device may request the second device to perform sensing measurement. For details, refer to the procedures in FIG. 3A to FIG. 3E. Details are not described herein again.

S902: The second device sends second information and third information to the first device.

Correspondingly, the first device receives the second information and the third information from the second device.

For example, the second device may determine actual transmit power of the second information based on first power indicated by the first power indication information. Optionally, the actual transmit power of the second information may be the first power. The second device may determine actual transmit power of the third information based on second power indicated by the second power indication information. Optionally, the actual transmit power of the third information may be determined based on the second power and a path loss. For example, the actual transmit power of the third information may be the second power plus the path loss.

The second information may be the field used for sensing measurement in the PPDU, and the third information may be another field, in the PPDU, other than the field used for sensing measurement, where the field may be referred to as a field that is not used for sensing measurement. For example, the second device may send the second information based on the first power, and the second device may determine the actual transmit power of the third information based on the path loss and the second power, and send the third information based on the actual transmit power. Optionally, the second power indication information may be an RSSI, and the first power may be understood as average power of all antennas in a 20 MHz bandwidth, and is subject to antenna interface power.

In an example, the structure of the HE ranging (ranging) NDP used for ranging is used as an example. The second information may include a high efficiency long training field 1 HE-LTE-1 and a high efficiency long training field 2 to an HE-LTE-n and packet extension PE. The third information may include a legacy short training field L-STF, a legacy long training field L-LTF, a legacy signal field L-SIG, a repeated legacy signal field RL-SIG, and a high efficiency signal field A HE-SIG-A.

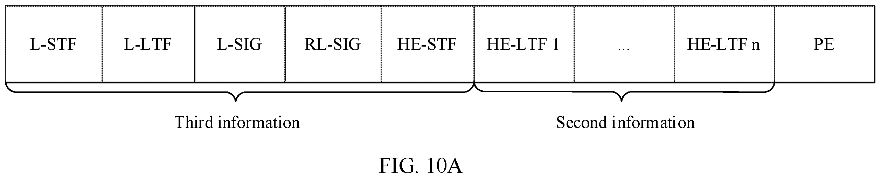

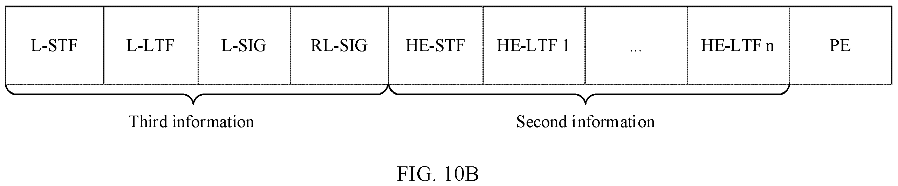

In a possible case, as shown in FIG. 10A, the second information may further include a high efficiency short training field HE-STF, and the third information does not include an HE-STF. In another possible case, as shown in FIG. 10B, the third information may further include an HE-STF, and the second information does not include an HE-STF.

It should be noted that, when the sensing receiver receives the PPDU, an ADC performs adjustment based on the HE-STF of the PPDU. Therefore, as shown in FIG. 10A, if actual transmit power of the HE-STF is the first power, that is, when the second information includes the HE-STF, adjustment of AGC may not be suitable for the HE-LTF part. As shown in FIG. 10B, if the actual transmit power of the HE-STF is determined based on the second power, that is, when the third information includes the HE-STF, adjustment of AGC is more suitable for the HE-LTF part, to improve a possibility of receiving the HE-LTF.

It may be understood that the second information and the third information shown in FIG. 10A and FIG. 10B are shown as examples, and do not constitute a limitation on the second information and the third information. Fields included in the second information may be different in different scenarios. For example, in a high-frequency scenario, the field used for sensing measurement may be a TRN field, and the field that is not used for sensing measurement may be another field other than the TRN field.

S903: The second device obtains CSI.

For example, the second device may perform channel estimation based on the second information, to obtain the CSI.

Optionally, when the second device does not receive the field used for sensing measurement in the PPDU, for example, because power of the field used for sensing measurement in the PPDU is small, the second device cannot receive the field and receives only noise, the second device uses the received noise as a received signal to perform channel estimation during channel estimation. Consequently, the CSI received by the second device is inaccurate. To reduce the foregoing problem, the second device may perform channel estimation in the following manner 1 or manner 2.

Manner 1: The second device also performs channel estimation on the field that is not used for sensing measurement. If the second device accurately receives the field used for sensing measurement, and performs channel estimation on the field used for sensing measurement, the two parts of channel estimation are similar to each other. Therefore, the second device may determine a similarity between a result of channel estimation performed on the field used for sensing measurement and a result of channel estimation performed on the field that is not used for sensing measurement, to determine whether the received signal is noise.

Manner 2: When sending the PPDU, the first device may add a piece of verification information to the field part used for sensing measurement. For example, a verification field is added to the PE. In this case, the second device may perform channel equalization on the field used for sensing measurement based on the result of channel estimation performed on the field used for sensing measurement. The second device verifies the verification information after channel equalization. If verification succeeds, the second device may consider that the result of channel estimation performed on the field used for sensing measurement is a valid result. If verification succeeds, the second device considers that the result of channel estimation performed on the field used for sensing measurement is an invalid result. In other words, the second device does not receive the second information, and receives noise.

For example, the first device adds a verification field to the PE, and the verification field may be generated based on the field used for sensing measurement. For example, the verification field may be obtained by performing an operation, for example, encryption, compression, or exclusive OR, on the field used for sensing measurement. In this case, after performing channel equalization on the field used for sensing measurement, the second device verifies the verification field based on the field used for sensing measurement. For example, the second device may decrypt or decompress the verification field. When a decrypted or decompressed verification field is the same as the field used for sensing measurement, the second device may consider that verification succeeds; otherwise, the second device may consider that verification fails. For another example, the second device may encrypt or compress the field used for sensing measurement. When an encrypted or compressed field that is not used for sensing measurement is the same as the verification field, the second device may consider that verification succeeds; otherwise, the second device may consider that verification fails.

Optionally, if the received second information is noise, the second device may abandon CSI obtained by current channel estimation. In other words, the second device may not send the CSI obtained through the current channel estimation to the first device.

The second device may process the CSI based on S903, to obtain the sensing result. Optionally, the second device may send a sensing measurement report to the first device.

Optionally, an embodiment shown in FIG. 9 may further include the following operation.

S904: The second device sends the CSI to the first device.

Correspondingly, the first device receives the CSI from the second device.

The first device may process the CSI, to obtain the sensing result.

According to the foregoing solutions, the field used for sensing measurement and the field that is not used for sensing measurement in the PPDU are sent by using different actual transmit power, the actual transmit power of the field used for sensing measurement is restricted based on the first power indication information, and the actual transmit power of the field that is not used for sensing measurement is restricted based on the second power indication information. This can maintain stability of the actual transmit power of the field used for sensing measurement in the PPDU as much as possible, to reduce impact on the sensing result, and improve sensing performance. In addition, for the field that is not used for sensing measurement, power adjustment is performed based on the RSSI, to improve a possibility of decoding the PPDU. Therefore, when channel estimation cannot be correctly performed due to excessively low power of the field used for sensing measurement in the PPDU, the sensing receiver may still know transmission of the PPDU.

The following describes transmission manners of the first power indication information and the second power indication information.

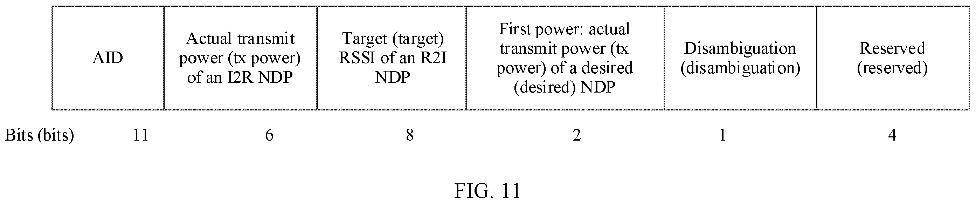

In an example, the second power indication information may be a target RSSI. The first power indication information may be carried in a newly added field in an element carrying the target RSSI. Refer to FIG. 11. For example, a field, for example, a desired I2RNDP actual transmit power (desired I2R NDP tx power) field, may be newly added to the NDPA frame shown in FIG. 5. The field may indicate the first power. Optionally, the first power indication information may be used to request the PPDU, for example, the actual transmit power of the field used for sensing measurement in the I2R NDP. The NDPA frame may be the NDPA frame shown in FIG. 3A, or may be the NDPA frame shown in FIG. 3B.

In another example, the first power indication information may be carried in STA information. Optionally, the first device may restrict, based on identifier information, the second device that can receive the STA information. For example, when a station identifier (station identifier, AID) is equal to 2045, the STA information is similar to common information, and all second devices may receive and parse the STA information. Similarly, the second power indication information may be implemented in a same manner as the first power indication information.

In another example, the first power indication information may alternatively be carried in a trigger (trigger) frame. For example, the first power indication information may be carried in common information (common information) of the trigger frame. For another example, the first power indication information may be carried in a user information list (user information list) of the trigger frame. For another example, the first power indication information may alternatively be carried in the sensing sounding trigger frame sent by the ISTA in the TF sounding phase shown in FIG. 3C. Similarly, the second power indication information may be implemented in a same manner as the first power indication information.

In a high-frequency scenario, the first power indication information and the second power indication information may be carried in a BRP frame. For example, a field may be newly added to the BRP frame to carry the first power indication information. For another example, the first power indication information may be carried in an existing field of the BRP frame. In other words, the first power indication information may reuse an existing field of the BRP frame. For another example, the first power indication information may be carried in a related element, for example, a DMG sensing element, of the BRP frame. The second power indication information may be implemented in a same manner as the first power indication information.

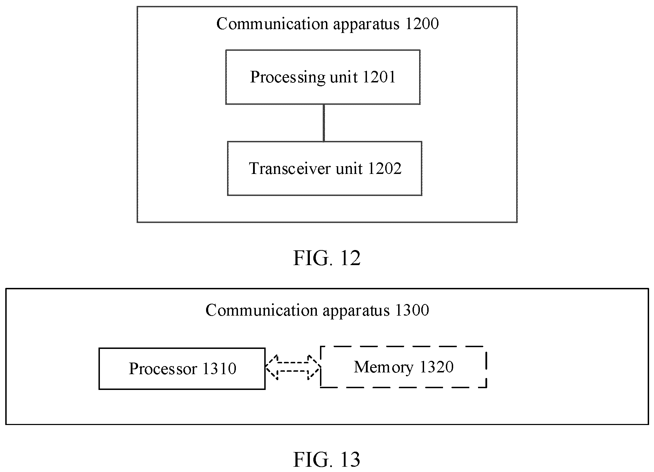

Refer to FIG. 12. Based on a concept of the foregoing embodiments, an embodiment of this application provides a communication apparatus 1200. The apparatus 1200 includes a processing unit 1201 and a transceiver unit 1202. The apparatus 1200 may be a first device, a device used in a first device, or an apparatus that can support a first device in performing the information transmission method. Alternatively, the apparatus 1200 may be a second device, a device used in a second device, or an apparatus that can support a second device in performing the information transmission method.

The transceiver unit may also be referred to as a transceiver module, a transceiver, a transceiver machine, a transceiver apparatus, or the like. The processing unit may also be referred to as a processor, a processing board, a processing unit, a processing apparatus, or the like. Optionally, a component that is in the transceiver unit and that is configured to implement a receiving function may be considered as a receiving unit. It should be understood that the transceiver unit is configured to perform a sending operation and a receiving operation on a first device side or a second device side in the foregoing method embodiments, and a component that is in the transceiver unit and that is configured to implement a sending function is considered as a sending unit. In other words, the transceiver unit includes the receiving unit and the sending unit. When the apparatus 1200 is used in the first device, the sending unit included in the transceiver unit 1202 of the apparatus 1200 is configured to perform the sending operation on the first device side, for example, sending a PPDU, which may specifically be sending a PPDU to the second device. The receiving unit included in the transceiver unit 1202 of the apparatus 1200 is configured to perform the receiving operation on the first device side, for example, receiving first information, which may specifically be receiving the PPDU from the second device. When the apparatus 1200 is used in the second device, the receiving unit included in the transceiver unit 1202 of the apparatus 1200 is configured to perform the receiving operation on the second device side, for example, receiving the PPDU, which may specifically be receiving the PPDU from the first device. The sending unit included in the transceiver unit 1202 of the apparatus 1200 is configured to perform the sending operation on the second device side, for example, send the first information, which may specifically be sending the first information to the first device.

In addition, it should be noted that, if the apparatus is implemented by using a chip/chip circuit, the transceiver unit may be an input/output circuit and/or a communication interface, and perform an input operation (corresponding to the foregoing receiving operation) and an output operation (corresponding to the foregoing sending operation); and the processing unit is an integrated processor, a microprocessor, or an integrated circuit.

The following describes in detail an implementation in which the apparatus 1200 is used in the first device or the second device.

For example, operations performed by units of the apparatus 1200 when the apparatus 1200 is used in the first device are described in detail.

The transceiver unit 1202 is configured to receive the PPDU from the second device. The PPDU is used for sensing measurement. The processing unit 1201 is configured to generate the first information, where the first information indicates AGC. The AGC indicates a gain index of the AGC obtained when the PPDU is received. The transceiver unit 1202 is further configured to send the first information to the second device. In a possible case, the first information may include one or more of the following information: gain index information of an LNA in the AGC, gain index information of a VGAin the AGC, AGC saturation information, AGC jump information, AGC change information, or first indication information.

For example, operations performed by units of the apparatus 1200 when the apparatus 1200 is used in the second device are described in detail.

The processing unit 1201 is configured to generate the PPDU. The PPDU is used for sensing measurement. The transceiver unit 1202 is configured to send the PPDU to the first device. The transceiver unit 1202 is further configured to receive the first information from the first device, where the first information indicates AGC. The AGC indicates a gain index of the AGC obtained when the PPDU is received.

Optionally, the second device may fixedly use one piece of AGC to receive the PPDU. The fixed AGC may be determined by the second device, or indicated by the first device. The second device may send one or more of AGC saturation information or first indication information to the first device. The second device may trigger an update of the AGC. When the apparatus 1200 is used in the first device, the transceiver unit 1202 is further configured to receive the PPDU from the first device by using fixed AGC, and send one or more of the AGC saturation information and the first indication information to the first device.

In a possible implementation, the processing unit 1201 is further configured to determine the fixed AGC.

In a possible implementation, the transceiver unit 1202 is further configured to receive second indication information from the second device. The second indication information indicates the fixed AGC. Optional, the transceiver unit 1202 is further configured to receive third indication information or a timer from the second device. The third indication information indicates a period of time.

In a possible implementation, the transceiver unit 1202 is further configured to receive AGC update information from the second device. The AGC update information indicates the first device to update the fixed AGC. Optionally, the processing unit 1201 is further configured to determine new AGC based on the AGC update information.

When the apparatus 1200 is used in the second device, the transceiver unit 1202 is further configured to receive the first indication information or the AGC saturation information from the first device.

In a possible implementation, the transceiver unit 1202 is further configured to send second indication information to the first device. The second indication information indicates the fixed AGC. Optionally, the transceiver unit 1202 is further configured to send third indication information or a timer to the first device. The third indication information indicates a period of time.

In a possible implementation, the transceiver unit 1202 is further configured to send AGC update information to the first device. The AGC update information indicates the first device to update the fixed AGC.

For example, operations performed by units of the apparatus 1200 when the apparatus 1200 is used in the first device are described in detail.

The processing unit 1201 is configured to generate first power indication information and second power indication information. The transceiver unit 1202 is configured to send the first power indication information and the second power indication information to a second device, where the first power indication information and the second power indication information indicate power of a same PPDU, and the PPDU is used for sensing measurement. First power indicated by the first power indication information is different from second power indicated by the second power indication information.

For example, operations performed by units of the apparatus 1200 when the apparatus 1200 is used in the second device are described in detail.

The transceiver unit 1202 is configured to receive first power indication information and second power indication information from a first device, where the first power indication information and the second power indication information indicate power of a same PPDU, and the PPDU is used for sensing measurement. First power indicated by the first power indication information is different from second power indicated by the second power indication information. The processing unit 1201 is configured to generate CSI or the PPDU based on the first power and the second power.

Based on a conception of embodiments, as shown in FIG. 13, an embodiment of this application provides a communication apparatus 1300. The communication apparatus 1300 includes a processor 1310. Optionally, the communication apparatus 1300 may further include a memory 1320, configured to store instructions executed by the processor 1310, store input data required by the processor 1310 to run the instructions, or store data generated after the processor 1310 runs the instructions. The processor 1310 may implement, by using the instructions stored in the memory 1320, the method shown in the foregoing method embodiments.

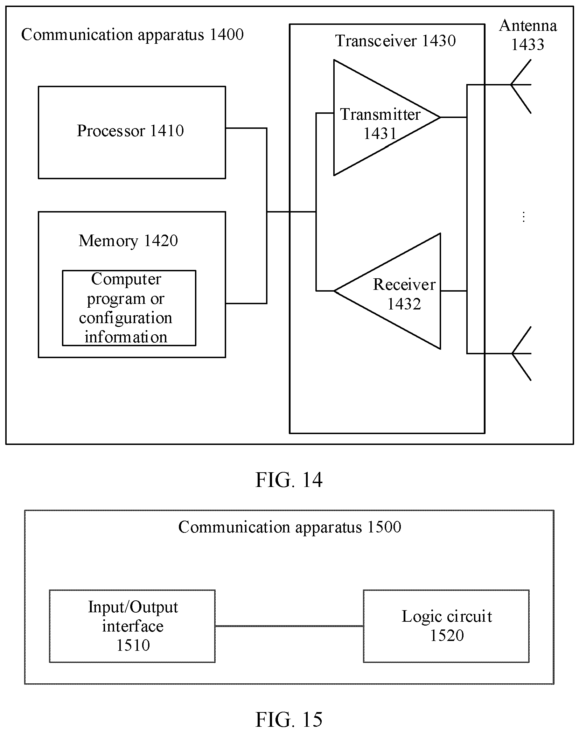

Based on a concept of embodiments, as shown in FIG. 14, an embodiment of this application provides a communication apparatus 1400. The communication apparatus 1400 may be a chip or a chip system. Optionally, in embodiments of this application, the chip system may include a chip, or may include a chip and another discrete device.

The communication apparatus 1400 may include at least one processor 1410. The processor 1410 is coupled to a memory. Optionally, the memory may be located inside the apparatus, or may be located outside the apparatus. For example, the communication apparatus 1400 may further include at least one memory 1420. The memory 1420 stores a necessary computer program, configuration information, a computer program or instructions, and/or data for implementing any one of the foregoing embodiments. The processor 1410 may execute the computer program stored in the memory 1420, to complete the method in any one of the foregoing embodiments.

Coupling in embodiments of this application is indirect coupling or a communication connection between apparatuses, units, or modules, and may be in an electrical, mechanical, or another form, and is used for information exchange between the apparatuses, units, or modules. The processor 1410 may cooperate with the memory 1420. A specific connection medium between a transceiver 1430, the processor 1410, and the memory 1420 is not limited in this embodiment of this application.

The communication apparatus 1400 may further include the transceiver 1430, and the communication apparatus 1400 may exchange information with another device by using the transceiver 1430. The transceiver 1430 may be a circuit, a bus, a transceiver, or any other apparatus that can be configured to exchange information, or is referred to as a signal transceiver unit. As shown in FIG. 14, the transceiver 1430 includes a transmitter 1431, a receiver 1432, and an antenna 1433. In addition, when the communication apparatus 1400 is a chip type apparatus or circuit, the transceiver in the communication apparatus 1400 may alternatively be an input/output circuit and/or a communication interface, and may input data (or is referred to as receiving data) and output data (or is referred to as sending data). The processor is an integrated processor, a microprocessor, or an integrated circuit, and the processor may determine output data based on input data.

In a possible implementation, the communication apparatus 1400 may be used in a first device. Specifically, the communication apparatus 1400 may be the first device, or may be an apparatus that can support the first device in implementing the function of the first device in any one of the foregoing embodiments. The memory 1420 stores a necessary computer program, a computer program or instructions, and/or data for implementing functions of the first device in any one of the foregoing embodiments. The processor 1410 may execute the computer program stored in the memory 1420, to complete the method performed by the first device in any one of the foregoing embodiments. When the communication apparatus 1400 is used in the first device, the transmitter 1431 in the communication apparatus 1400 may be configured to transmit a PPDU by using the antenna 1433.

In another possible implementation, the communication apparatus 1400 may be used in a second device. Specifically, the communication apparatus 1400 may be the second device, or may be an apparatus that can support the second device in implementing the function of the second device in any one of the foregoing embodiments. The memory 1420 stores a necessary computer program, a computer program or instructions, and/or data for implementing functions of the second device in any one of the foregoing embodiments. The processor 1410 may execute the computer program stored in the memory 1420, to complete the method performed by the second device in any one of the foregoing embodiments. When the communication apparatus 1400 is used in the second device, the receiver 1432 in the communication apparatus 1400 may be configured to receive a PPDU by using the antenna 1433.

The communication apparatus 1400 provided in this embodiment may be used in a first device to complete the method performed by the first device, or may be used in a second device to complete the method performed by the second device. Therefore, for technical effect that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 15. Based on the foregoing embodiments, an embodiment of this application further provides another communication apparatus 1500, including: an input/output interface 1510 and a logic circuit 1520. The input/output interface 1510 is configured to receive code instructions and transmit the code instructions to the logic circuit 1520. The logic circuit 1520 is configured to execute the code instructions to perform the method performed by the first device or the method performed by the second device in any one of the foregoing embodiments.

The following describes in detail an operation performed by the communication apparatus used in the first device or the second device.

In a possible implementation, the communication apparatus 1500 may be used in the first device, to perform the method performed by the first device. For example, the method may specifically be the method performed by the first device in the embodiment shown in FIG. 2. The input/output interface 1510 is configured to input a PPDU from the second device. The PPDU is used for sensing measurement. The logic circuit 1520 is configured to generate first information, where the first information indicates AGC. The AGC indicates a gain index of the AGC obtained when the PPDU is received. The input/output interface 1510 is further configured to output the first information to the second device.

In another optional implementation, the communication apparatus 1500 may be used in the second device, to perform the method performed by the second device. For example, the method may specifically be the method performed by the second device in the method embodiments shown in FIG. 2. The logic circuit 1520 is configured to generate a PPDU. The PPDU is used for sensing measurement. The input/output interface is configured to output the PPDU to the first device. The input/output interface 1510 is further configured to input first information from the first device, where the first information indicates AGC. The AGC indicates a gain index of the AGC obtained when the PPDU is received.

In still another possible implementation, the communication apparatus 1500 may be used in the first device, to perform the method performed by the first device. For example, the method may specifically be the method performed by the first device in the embodiment shown in FIG. 6. The logic circuit 1520 is configured to generate first power indication information and second power indication information. The input/output interface 1510 is configured to output the first power indication information and the second power indication information to the second device, where the first power indication information and the second power indication information indicate power of a same PPDU, and the PPDU is used for sensing measurement. First power indicated by the first power indication information is different from second power indicated by the second power indication information.

In another optional implementation, the communication apparatus 1500 may be used in the second device, to perform the method performed by the second device. For example, the method may specifically be the method performed by the second device in the method embodiments shown in FIG. 6. The input/output interface 1510 is configured to input first power indication information and second power indication information from the first device, where the first power indication information and the second power indication information indicate power of a same PPDU, and the PPDU is used for sensing measurement. First power indicated by the first power indication information is different from second power indicated by the second power indication information. The logic circuit 1520 is configured to generate CSI or the PPDU based on the first power and the second power.

The communication apparatus 1500 provided in this embodiment may be used in the first device to perform the method performed by the first device, or may be used in the second device to complete the method performed by the second device. Therefore, for technical effect that can be achieved by this embodiment, refer to the foregoing method embodiments. Details are not described herein again.

Based on the foregoing embodiments, an embodiment of this application further provides a communication system. The communication system includes at least one communication apparatus used in a first device and at least one communication apparatus used in a second device. For technical effect that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the first device or the method performed by the second device in any one of the foregoing embodiments is implemented. The computer-readable storage medium may include: any medium that can store program code, such as a USB flash drive, a removable hard disk, a read-only memory, a random access memory, a magnetic disk, or an optical disc.

To implement the functions of the communication apparatus in FIG. 12 to FIG. 15, an embodiment of this application further provides a chip, including a processor and configured to support the communication apparatus in implementing the functions of the first device or the second device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more procedures in the flowcharts and/or in one or more blocks in the block diagrams.

The computer program or instructions may alternatively be stored in a computer-readable memory that can instruct the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art may make various modifications and variations to embodiments of this application without departing from the scope of embodiments of this application. This application is intended to cover these modifications and variations in embodiments of this application provided that they fall within the scope of protection defined by the following claims and their equivalent technologies.

## Claims

1. An information transmission method, comprising:
receiving, by a first device, a physical layer protocol data unit PPDU from a second device, wherein the PPDU is used for sensing measurement; and
sending, by the first device, first information to the second device, wherein the first information indicates automatic gain control AGC, and the AGC indicates a gain index of the AGC obtained when the PPDU is received.

2. The method according to claim 1, wherein a larger gain index of the AGC indicates a larger gain of the first device.

3. The method according to claim 1 or 2, wherein the first information comprises one or more of the following:
gain index information of a low noise amplifier in the AGC, gain index information of a variable gain amplifier in the AGC, AGC saturation information, or AGC jump information.

4. The method according to any one of claims 1 to 3, wherein the first information is carried in a sensing measurement report frame or a channel state information CSI frame.

5. The method according to any one of claims 1 to 3, wherein the first information is carried in one or more of the following:
a directional multi-gigabit DMG sensing report element, a DMG channel measurement feedback element, or an enhanced directional multi-gigabit EDMG channel measurement feedback element.

6. The method according to claim 5, wherein the first information further comprises one or more of an identifier of a DMG sensing instance, an identifier of a DMG sensing burst, and an identifier of a DMG measurement program, one DMG sensing burst comprises one or more DMG sensing instances, one DMG measurement program comprises one or more DMG sensing bursts, and one DMG sensing instance indicates one time of sensing.

7. An information transmission method, comprising:
sending, by a second device, a physical layer protocol data unit PPDU to a first device, wherein the PPDU is used for sensing measurement; and
receiving, by the second device, first information from the first device, wherein the first information indicates automatic gain control AGC, and the AGC indicates a gain index of the AGC obtained when the PPDU is received.

8. The method according to claim 7, wherein a larger gain index of the AGC indicates a larger gain of the first device.

9. The method according to claim 7 or 8, wherein the first information comprises one or more of the following:
gain index information of a low noise amplifier in the AGC, gain index information of a variable gain amplifier in the AGC, AGC saturation information, or AGC jump information.

10. The method according to any one of claims 7 to 9, wherein the first information is carried in a sensing measurement report frame or a channel state information CSI frame.

11. The method according to any one of claims 7 to 9, wherein the first information is carried in one or more of the following:
a directional multi-gigabit DMG sensing report element, a DMG channel measurement feedback element, or an enhanced directional multi-gigabit EDMG channel measurement feedback element.

12. The method according to claim 11, wherein the first information further comprises one or more of an identifier of a DMG sensing instance, an identifier of a DMG sensing burst, and an identifier of a DMG measurement program, one DMG sensing burst comprises one or more DMG sensing instances, one DMG measurement program comprises one or more DMG sensing bursts, and one DMG sensing instance indicates one time of sensing.

13. An information transmission method, comprising:
sending, by a first device, first power indication information and second power indication information to a second device, wherein the first power indication information and the second power indication information indicate power of a same physical layer protocol data unit PPDU, and the PPDU is used for sensing measurement, wherein
first power indicated by the first power indication information is different from second power indicated by the second power indication information.

14. The method according to claim 13, wherein the first power is power, of the PPDU, to be processed by a digital-to-analog converter, and the second power is actual transmit power of the PPDU.

15. The method according to claim 13 or 14, wherein the first power indication information is carried in a null data packet announcement NDPA frame or an enhanced directional multi-gigabit EDMG transmit power element.

16. The method according to claim 13, wherein the first power is power of second information, and the second power is power of third information; and
the second information comprises a field, of the PPDU, used for sensing measurement, and the third information comprises another field, of the PPDU, other than the field used for sensing measurement.

17. The method according to claim 16, wherein the second information comprises a high efficiency short training field HE-STF.

18. The method according to claim 16 or 17, wherein the first power indication information is carried in station STA information, a trigger frame, or a beam refinement protocol BRP frame.

19. An information transmission method, comprising:
receiving, by a second device, first power indication information and second power indication information from a first device, wherein the first power indication information and the second power indication information indicate power of a same physical layer protocol data unit PPDU, and the PPDU is used for sensing measurement, wherein
first power indicated by the first power indication information is different from second power indicated by the second power indication information.

20. The method according to claim 19, wherein the first power is power, of the PPDU, to be processed by a digital-to-analog converter, and the second power is actual transmit power of the PPDU.

21. The method according to claim 19 or 20, wherein the first power indication information is carried in a null data packet announcement NDPA frame or an enhanced directional multi-gigabit EDMG transmit power element.

22. The method according to claim 19, further comprising:
sending, by the second device, second information based on the first power, wherein the second information comprises a field, of the PPDU, used for sensing measurement; and
sending, by the second device, third information based on the second power, wherein the third information comprises another field, of the PPDU, other than the field used for sensing measurement.

23. The method according to claim 22, wherein the second information comprises an HE-STF.

24. The method according to claim 22 or 23, wherein the first power indication information is carried in station STA information, a trigger frame, or a beam refinement protocol BRP frame.

25. A communication apparatus, comprising at least one processor, wherein the processor is coupled to a memory;
the memory is configured to store a computer program or instructions; and
the processor is configured to execute the computer program or the instructions, to implement the method according to any one of claims 1 to 6, the method according to any one of claims 7 to 12, the method according to any one of claims 13 to 18, or the method according to any one of claims 19 to 24.

26. A computer-readable storage medium, wherein the computer-readable storage medium stores a computer program or instructions, and when the instructions are run on a computer, the method according to any one of claims 1 to 6, the method according to any one of claims 7 to 12, the method according to any one of claims 13 to 18, or the method according to any one of claims 19 to 24 is implemented.

27. A computer program product, comprising computer-executable instructions, wherein when the computer-executable instructions are run on a computer, the computer is enabled to perform the method according to any one of claims 1 to 6, the method according to any one of claims 7 to 12, the method according to any one of claims 13 to 18, or the method according to any one of claims 19 to 24.

28. A chip, comprising at least one processor, wherein the at least one processor is coupled to a memory;
the memory is configured to store a computer program or instructions; and
the at least one processor is configured to execute the computer program or the instructions, to enable a communication apparatus comprising the chip to perform the method according to any one of claims 1 to 6, the method according to any one of claims 7 to 12, the method according to any one of claims 13 to 18, or the method according to any one of claims 19 to 24.
